(19) Europäisches Patentamt
European Patent Office
Office européen des brevets

(11) **EP 4 782 987 A1**

(12) **EUROPEAN PATENT APPLICATION**
published in accordance with Art. 153(4) EPC

(43) Date of publication:
**29.07.2026 Bulletin 2026/31**

(21) Application number: **24881556.5**

(22) Date of filing: **21.10.2024**

(51) International Patent Classification (IPC):
***G06F 7/544*** *(2006.01)*

(52) Cooperative Patent Classification (CPC):
**G06F 7/487; G06F 7/544**

(86) International application number:
**PCT/CN2024/126111**

(87) International publication number:
**WO 2025/087191 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.10.2023 CN 202311429893**

(71) Applicant: **HUAWEI TECHNOLOGIES CO., LTD.**
**Shenzhen 518129 (CN)**

(72) Inventors:
• **NI, Leibin**
**Shenzhen, Guangdong 518129 (CN)**
• **LIU, Haobo**
**Shenzhen, Guangdong 518129 (CN)**
• **QIAN, Zhengyang**
**Shenzhen, Guangdong 518129 (CN)**
• **WU, Wei**
**Shenzhen, Guangdong 518129 (CN)**
• **NIU, Xinxiang**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **COMPUTING DEVICE AND COMPUTING CHIP**

(57) This application provides a computing apparatus and a computing chip, relating to the field of computer technologies. The computing apparatus may include a digital-to-analog conversion module, an analog computing module, and an analog-to-digital conversion module. The digital-to-analog conversion module may be configured to: convert a mantissa part of an input floating-point number into an initial analog signal, and perform gain adjustment on the initial analog signal based on an exponent part of the input floating-point number to obtain an input analog signal. The analog computing module may be configured to perform analog computing based on the input analog signal to obtain a computation result analog signal. The analog-to-digital conversion module may be configured to convert the computation result analog signal into a result floating-point number. The computing apparatus converts the input floating-point number into the input analog signal, and performs floating-point number computation in analog domain, achieving higher computational efficiency than equivalent floating-point number computation in digital domain.

FIG. 4

**Description**

CROSS-REFERENCE TO RELATED APPLICATIONS

This application claims priority to Chinese Patent Application No. 202311429893.7, filed with the China National Intellectual Property Administration on October 27, 2023 and entitled "COMPUTING APPARATUS AND COMPUTING CHIP", which is incorporated herein by reference in its entirety.

TECHNICAL FIELD

This application relates to the field of computer technologies, and in particular, to a computing apparatus and a computing chip.

BACKGROUND

In computer systems, floating point (floating point, FP) is an approximate numerical representation for real numbers. A real number can be expressed as a significand (also referred to as mantissa part) combined with a power value, and the exponent (also referred to as an exponent part) is an integer power of a base. In other words, a real number is represented as a significand multiplied by an integer exponent of a base. A value represented by a floating point can be referred to as a floating-point domain number or a floating-point number.

Using floating point numbers for computation is called floating-point computation, which typically encompasses multiplication and addition. Currently, floating-point computation is usually implemented in digital domain. In the digital domain, implementing multiplication requires adding exponent parts of two floating-point number and multiplying their mantissa parts; and implementing addition requires comparing exponent parts of two floating-point numbers, aligning significant bits of mantissa parts based on a comparison result, and then adding the two aligned mantissa parts. The computational efficiency of the above floating-point operations in digital domain is relatively low.

SUMMARY

This application provides a computing apparatus and a computing chip. Floating-point computation is performed in analog domain by converting a floating-point number into an analog signal, so that computational efficiency of the floating-point computation can be improved.

According to a first aspect, this application provides a computing apparatus. The computing apparatus may be used in a computing chip, and the computing apparatus may include a digital-to-analog conversion module, an analog computing module, and an analog-to-digital conversion module. The digital-to-analog conversion module may be configured to: convert a mantissa part of an input floating-point number into an initial analog signal, and perform gain adjustment on the initial analog signal based on an exponent part of the input floating-point number, to obtain an input analog signal. The analog computing module may be configured to perform analog computing based on the input analog signal to obtain a computation result analog signal. The analog-to-digital conversion module may be configured to convert the computation result analog signal into a result floating-point number.

According to the computing apparatus provided in this application, the input floating-point number is converted into the input analog signal, and floating-point computation is performed in analog domain. In comparison with floating-point computation in digital domain, computational efficiency of floating-point computation can be improved. In addition, floating-point computation in analog domain helps reduce power consumption of the computing apparatus. In addition, when converting the input floating-point number into the input analog signal, the digital-to-analog conversion module first processes the mantissa part of the input floating-point number, converts the mantissa part of the input floating-point number into the initial analog signal, and then performs gain adjustment on the initial analog signal in analog domain based on the exponent part of the input floating-point number, to obtain the input analog signal. When exponent parts of input floating-point numbers are different, gain multiples during gain adjustment on the initial analog signal are different, and obtained input analog signals also have different magnitudes. Therefore, a plurality of input floating-point numbers with different exponent parts may be converted into a plurality of input analog signals with different magnitudes, and floating-point number computation may be performed on the plurality of input floating-point numbers with the different exponent parts in analog domain, so that an application scope of analog computing is extended.

The computing apparatus provided in this application may be used in a training or inference process of a neural network model in the artificial intelligence field. In a training or inference process of a neural network model, computing usually needs to be performed on a large amount of data, and convolution computing includes a multiplication operation and an addition operation. The analog computing module may simultaneously perform analog computing on a plurality of pieces of data in analog domain. This can greatly improve computational efficiency of floating-point computation.

In a possible implementation, the digital-to-analog conversion module may include a signal conversion unit and a mantissa output unit. The signal conversion unit may be configured to: determine, based on the received computation result analog signal, a voltage value corresponding to a mantissa part of the result floating-point number, and output an exponent part of the result floating-point number. The mantissa output unit may be configured to: output the mantissa part of the result floating-point number based on the voltage value corresponding to the mantissa part of the result floating-point number.

In the foregoing implementation, when the computation result analog signal is converted into the result floating-point number, the exponent part and the mantissa part of the result floating-point number are separately determined based on the computation result analog signal. This helps complete floating-point computation in analog domain.

In a possible implementation, the computation result analog signal may be an output current analog signal. The signal conversion unit may include a first conversion unit and a first dynamic adjustment unit. The first conversion unit may be configured to convert the output current analog signal into a voltage signal. The first dynamic adjustment unit may be configured to adjust, based on variation of the voltage signal, a conversion ratio parameter of the first conversion unit for the output current analog signal, where the conversion ratio parameter represents the exponent part of the result floating-point number, and the voltage signal output by the first conversion unit represents the voltage value corresponding to the mantissa part of the result floating-point number.

In the foregoing implementation, the voltage signal output by the first conversion unit is detected, so that the first dynamic adjustment unit can adjust the conversion ratio parameter of the first conversion unit for the output current analog signal in a timely manner, determine the exponent part of the result floating-point number based on a finally obtained conversion ratio parameter, and determine the mantissa part of the result floating-point number based on the voltage signal output by the first conversion unit when the conversion ratio parameter is determined, so that different result floating-point numbers may be obtained based on different magnitudes of the output current analog signal, and the conversion from the computation result analog signal to the result floating-point number in digital domain is completed. Therefore, dynamic ranges of result floating-point numbers read based on different computation result analog signals can be self-adaptively adjusted, and reading of result floating-point numbers with different exponents can be supported.

In a possible implementation, in addition to the first conversion unit and the first dynamic adjustment unit, the signal conversion unit may further include a first quantization unit. The first conversion unit is an active integrator unit.

The active integrator unit may be configured to integrate the output current analog signal over a specified period of time to obtain a first voltage. The first quantization unit may be configured to transmit a control signal to the first dynamic adjustment unit over the specified period of time based on variation of the first voltage. The first dynamic adjustment unit may be configured to adjust, over the specified period of time based on the control signal from the first quantization unit, a conversion ratio parameter of the active integrator unit for the output current analog signal.

The first quantization unit may be further configured to determine, based on the first voltage output by the active integrator unit upon expiration of the specified period of time, the voltage value corresponding to the mantissa part of the result floating-point number. The first dynamic adjustment unit may be further configured to output the exponent part of the result floating-point number based on the conversion ratio parameter of the active integrator unit for the output current analog signal upon expiration of the specified period of time.

In the foregoing implementation, a process of converting the output current analog signal into the result floating-point number may be divided into a self-adaptation phase and a quantization phase, where a phase over the specified period of time is the self-adaptation phase, and a phase after the specified period of time is the quantization phase. In the self-adaptation phase, the analog-to-digital conversion module may integrate the output current analog signal through the active integrator unit, and convert the output current analog signal into the first voltage. By detecting the first voltage output by the active integrator unit, the first dynamic adjustment unit may adjust the conversion ratio parameter of the active integrator unit for the output current analog signal in a timely manner until the specified period of time elapses. In the quantization phase, the first dynamic adjustment unit determines the exponent part of the result floating-point number based on a finally obtained conversion ratio parameter. The first quantization unit determines the mantissa part of the result floating-point number based on the first voltage output by the active integrator unit when the conversion ratio parameter is determined, so that different result floating-point numbers may be obtained based on different magnitudes of the output current analog signal, and the conversion from the computation result analog signal to the result floating-point number is completed.

For example, the active integrator unit may include an integrator, and the integrator may be configured to: receive the output current analog signal, and output the first voltage based on the output current analog signal.

The first quantization unit may include a first comparator. A first input end of the first comparator is connected to an output end of the integrator, and is configured to receive the first voltage output by the integrator. A second input end of the first comparator is configured to be connected to a ramp signal generation circuit. The ramp signal generation circuit is configured to: provide a constant voltage for the first comparator over the specified period of time, and provide, for the first comparator after the specified period of time elapses, a ramp voltage that changes at a specified rate.

The first dynamic adjustment unit includes a plurality of capacitor branches. A first end of each of the plurality of capacitor branches is connected to an input end of the integrator, a second end is connected to the output end of the integrator, and each capacitor branch is connected to one flip-flop. An input end of each flip-flop is connected to an output end of the first comparator, and is configured to control, under action of the control signal output by the first comparator, a corresponding capacitor branch to be connected or disconnected, to adjust the conversion ratio parameter of the active integrator unit for the output current analog signal.

In another possible implementation, in addition to the first conversion unit and the first dynamic adjustment unit, the signal conversion unit may further include a second quantization unit. The first conversion unit is an operational amplifier unit.

The operational amplifier unit may be configured to output a second voltage based on the output current analog signal. The first dynamic adjustment unit may be configured to adjust, based on variation of the second voltage, a conversion ratio parameter of the operational amplifier unit for the output current analog signal until a variation amplitude of the second voltage is less than or equal to a first specified amplitude threshold.

The second quantization unit may be configured to determine, based on the second voltage whose variation amplitude is less than or equal to the first specified amplitude threshold, the voltage value corresponding to the mantissa part of the result floating-point number. The first dynamic adjustment unit may be further configured to output the exponent part of the result floating-point number based on the conversion ratio parameter of the operational amplifier unit for the output current analog signal when the variation amplitude of the second voltage is less than or equal to the first specified amplitude threshold.

In the foregoing implementation, a process of converting the output current analog signal into the result floating-point number may be divided into a self-adaptation phase and a quantization phase. In the self-adaptation phase, the operational amplifier unit may output the second voltage based on the output current analog signal. By detecting the second voltage output by the operational amplifier unit, the first dynamic adjustment unit may adjust the conversion ratio parameter of the operational amplifier unit for the output current analog signal in a timely manner until the variation amplitude of the second voltage is less than or equal to the first specified amplitude threshold, and the self-adaptation phase ends. In the quantization phase, the first dynamic adjustment unit may determine the exponent part of the result floating-point number based on a finally determined conversion ratio parameter for the output current analog signal. The second quantization unit may determine the mantissa part of the result floating-point number based on the second voltage output by the operational amplifier unit when the conversion ratio parameter is determined, so that different result floating-point numbers may be obtained based on different magnitudes of the output current analog signal, and the conversion from the computation result analog signal to the result floating-point number is completed. This implementation supports reading of result floating-point numbers with different exponent parts.

In a possible implementation, the operational amplifier unit may include a first operational amplifier, and the first operational amplifier is configured to: receive the output current analog signal and output the second voltage.

The first dynamic adjustment unit may include a second comparator, a plurality of flip-flops, and a plurality of switched resistor branches. A first input end of the second comparator is connected to an output end of the first operational amplifier, and is configured to receive the second voltage output by the first operational amplifier, and a second input end of the second comparator is configured to input a reference voltage. The second comparator is configured to output a control signal based on variation of the second voltage.

A first end of each of the plurality of switched resistor branches is connected to an input end of the first operational amplifier, and a second end is connected to the output end of the first operational amplifier.

An input end of each of the plurality of flip-flops is connected to an output end of the second comparator. An output end of each of the plurality of flip-flops is connected to a corresponding switched resistor branch among the plurality of switched resistor branches, and is configured to control, under action of the control signal output by the second comparator, the corresponding switched resistor branch to be connected or disconnected, to adjust the conversion ratio parameter of the operational amplifier unit for the output current analog signal.

In the foregoing implementation, each time the conversion ratio parameter for the output current analog signal is adjusted, the second voltage output by the first operational amplifier tends to be stable immediately after an RC response effect. Therefore, there is no need to set specified period of time for the self-adaptation phase, but it is ensured that the second voltage output by the first operational amplifier has reached a stable state. This implementation does not depend on accuracy of the specified period of time, but depends on that the voltage output by the first operational amplifier has been stable, so that accuracy of the read result floating-point number can be improved.

In another possible implementation, the operational amplifier unit may include an operational amplifier negative feedback circuit, a plurality of transistor branches, and a current-to-voltage converter. The operational amplifier negative feedback circuit is configured to receive the output current analog signal. The plurality of transistor branches are connected between an output end of the operational amplifier negative feedback circuit and an input end of the current-to-voltage converter. The current-to-voltage converter is configured to convert a current signal output by the plurality of transistor branches into the second voltage.

The first dynamic adjustment unit may include a third comparator and a plurality of flip-flops. A first input end of the third comparator is connected to an output end of the current-to-voltage converter, and is configured to receive the second voltage output by the operational amplifier unit. A second input end of the third comparator is configured to input a reference voltage. An input end of each of the plurality of flip-flops is connected to an output end of the third comparator. An output end of each of the plurality of flip-flops is connected to a corresponding transistor branch in the plurality of transistor branches, and is configured to control, under an action of a control signal output by the third comparator, the corresponding transistor branch to be connected or disconnected, to adjust the conversion ratio parameter of the operational amplifier unit for the output current analog signal.

In the foregoing implementation, each time the conversion ratio parameter for the output current analog signal is adjusted, the current signal output by the plurality of transistor branches immediately tends to be stable. Therefore, there is no need to set specified period of time for the self-adaptation phase, but it is ensured that the second voltage obtained by converting the current signal output by the plurality of transistor branches has reached a stable state. This implementation does not depend on accuracy of the specified period of time, but depends on that the current signal output by the plurality of transistor branches has been stable, so that accuracy of the read result floating-point number can be improved.

In a possible implementation, the computation result analog signal may be an output optical analog signal. The signal conversion unit may include a first optical-to-electrical conversion unit and an electrical-to-digital conversion unit. The first optical-to-electrical conversion unit may be configured to convert the output optical analog signal into an output current analog signal. The electrical-to-digital conversion unit may be configured to: determine, based on the output current analog signal, the voltage value corresponding to the mantissa part of the result floating-point number, and output the exponent part of the result floating-point number.

In the foregoing implementation, when the computation result analog signal is the output optical analog signal, the first optical-to-electrical conversion unit may first convert the output optical analog signal into the output current analog signal, and then the electrical-to-digital conversion unit processes the output current analog signal. The electrical-to-digital conversion unit may be implemented with reference to the manner of converting the output current analog signal into the result floating-point number provided in any one of the foregoing implementations. In this implementation, the conversion from the output optical analog signal to the result floating-point number may be completed, so that floating-point computation may also be applicable to an optical computing scenario.

In a possible implementation, the computation result analog signal may be an output optical analog signal. The signal conversion unit may include a second optical-to-electrical conversion unit, a current-to-voltage conversion unit, a second dynamic adjustment unit, and a third quantization unit. The second optical-to-electrical conversion unit may be configured to output a current signal based on the output optical analog signal. The current-to-voltage conversion unit may be configured to output a third voltage based on the current signal output by the second optical-to-electrical conversion unit. The second dynamic adjustment unit may be configured to adjust, based on variation of the third voltage, a conversion ratio parameter of the second optical-to-electrical conversion unit for the output optical analog signal until a variation amplitude of the third voltage is less than or equal to a second specified amplitude threshold. The third quantization unit may be configured to determine, based on the third voltage whose variation amplitude is less than or equal to the second specified amplitude threshold, the voltage value corresponding to the mantissa part of the result floating-point number. The second dynamic adjustment unit may be further configured to output the exponent part of the result floating-point number based on the conversion ratio parameter of the second optical-to-electrical conversion unit for the output optical analog signal when the variation amplitude of the third voltage is less than or equal to the second specified amplitude threshold.

In a possible implementation, when detecting that the third voltage reaches a specified voltage value, the second dynamic adjustment unit may adjust the conversion ratio parameter of the second optical-to-electrical conversion unit for the output optical analog signal by adjusting a bias voltage of the second optical-to-electrical conversion unit.

In the foregoing implementation, a process of converting the output optical analog signal into the result floating-point number may be divided into a self-adaptation phase and a quantization phase. In the self-adaptation phase, the second optical-to-electrical conversion unit may convert the output optical analog signal into the current signal, and the current signal is converted into the third voltage by the current-to-voltage conversion unit. By detecting the third voltage output by the current-to-voltage conversion unit, the second dynamic adjustment unit may adjust the conversion ratio parameter of the second optical-to-electrical conversion unit for the output optical analog signal in a timely manner by adjusting the bias voltage of the second optical conversion unit until the variation amplitude of the third voltage is less than or equal to the second specified amplitude threshold, and the self-adaptation phase ends. In the quantization phase, the second dynamic adjustment unit may determine the exponent part of the result floating-point number based on a finally determined conversion ratio parameter for the output optical analog signal. The second quantization unit may determine the mantissa part of the result floating-point number based on the third voltage output by the current-to-voltage conversion unit when the conversion ratio parameter is determined, so that different result floating-point numbers may be obtained based on different magnitudes of the output optical analog signal, and the conversion from the computation result analog signal to the result floating-point number is completed.

In a possible implementation, the digital-to-analog conversion module may include a mantissa conversion unit and a gain adjustment unit. The mantissa conversion unit may be configured to convert the mantissa part of the input floating-point number into the initial analog signal. The gain adjustment unit may be configured to perform gain adjustment on the initial analog signal based on the exponent part of the input floating-point number, to obtain the input analog signal.

In a possible implementation, the input analog signal may be an input voltage analog signal, and the initial analog signal may be an initial voltage analog signal. The mantissa conversion unit may include a gating unit and a reference unit. The reference unit may be configured to provide an equal-difference voltage for the gating unit. The gating unit may be configured to convert the mantissa part into the initial voltage analog signal based on the equal-difference voltage provided by the reference unit.

In the foregoing implementation, the gating unit may convert, based on the equal-difference voltage provided by the reference unit, mantissa parts with different values into initial voltage analog signals with different magnitudes.

In a possible implementation, the gain adjustment unit may include a second operational amplifier and a plurality of feedback resistor branches. A first input end of the second operational amplifier is connected to an output end of the gating unit, and a second input end of the first operational amplifier is connected to a reference resistor. A first end of each of the plurality of feedback resistor branches is connected to the second input end of the second operational amplifier, and a second end of each of the plurality of feedback resistor branches is connected to an output end of the second operational amplifier. A part or all of the plurality of feedback resistor branches are connected based on the exponent part of the input floating-point number, and gain adjustment is performed on the initial voltage analog signal output by the gating unit, to obtain the input voltage analog signal.

In the foregoing implementation, the gain adjustment unit receives the exponent part of the input floating-point number through the plurality of feedback resistor branches, connects the part or all of the feedback resistor branches based on the exponent part of the input floating-point number, and performs gain adjustment on the initial voltage analog signal output by the gating unit. When exponent parts received by the plurality of feedback resistor branches are different, gain multiples of initial voltage analog signals output by the gating unit are also different, so that input voltage analog signals with different magnitudes may be obtained for input floating-point numbers whose exponent parts have different values.

In a possible implementation, the analog computing module may use a resistive random access memory RRAM array.

In the foregoing implementation, the analog computing module uses the RRAM array. For the RRAM array, a multiplication operation may be completed according to Ohm's law, and an addition operation may be completed according to Kirchhoff's law, so that multiplication and addition operations can be quickly completed. In comparison with completing floating-point number computation in digital domain, computational efficiency can be improved, and power consumption of the computing apparatus can be reduced.

In a possible implementation, the input analog signal may be an input current analog signal, and the initial analog signal may be an initial current analog signal. The mantissa conversion unit may be of a current mirror structure.

The current mirror structure may include a reference transistor and a plurality of output transistor branches. The plurality of output transistor branches may be configured to: receive the mantissa part of the input floating-point number, and output the initial current analog signal.

In the foregoing implementation, the mantissa part of the input floating-point number is converted into the initial current analog signal by using the current mirror structure. The mantissa part of the input floating-point number is received through the plurality of output transistor branches in the current mirror structure, and a part or all of the output transistor branches are connected based on the mantissa part of the input floating-point number. When exponent parts received by the plurality of output transistor branches are different, gain multiples of initial voltage analog signals output by the gating unit are also different, and magnitudes of initial current analog signals output by the current mirror structure are also different, so that mantissa parts with different values may be converted into initial voltage analog signals with different magnitudes.

In a possible implementation, the mantissa part of the input floating-point number may include N bits. The current mirror structure may include N output transistor branches. Each of the N output transistor branches may be configured to receive one of the N bits.

In another possible implementation, the mantissa part of the input floating-point number may include N bits. The current mirror structure may include M output transistor branches. The M output transistor branches may be configured to receive a thermometer code obtained by converting the N bits of the mantissa part. The thermometer code may include M bits.

In a possible implementation, the gain adjustment unit may include a plurality of switch-controlled transistor branches. The plurality of switch-controlled transistor branches may be configured to provide a plurality of gain adjustment coefficients, and the plurality of switch-controlled transistor branches are configured to: determine a target gain adjustment coefficient based on the exponent part of the input floating-point number, and perform gain adjustment on the initial current analog signal by using the target gain adjustment coefficient, to obtain the input current analog signal.

In the foregoing implementation, the gain adjustment unit may include the plurality of switch-controlled transistor branches. Each of the plurality of switch-controlled transistor branches may provide one gain adjustment coefficient.

Different switch-controlled transistor branches provide different gain adjustment coefficients. The gain adjustment unit may connect a part or all of the switch-controlled transistor branches based on the exponent part of the input floating-point number, to determine the target gain adjustment coefficient, and perform, based on the determined target gain adjustment coefficient, gain adjustment on the initial current analog signal output by the mantissa conversion unit. When the exponent parts received by the plurality of switch-controlled transistor branches are different, gain adjustment coefficients of the initial current analog signals output by the mantissa conversion unit are also different, so that input current analog signals with different magnitudes may be obtained for input floating-point numbers whose exponent parts have different values.

In a possible implementation, the analog computing module may use a flash memory transistor array.

In the foregoing implementation, the analog computing module may use the flash memory transistor array, and the flash memory transistor array completes floating-point computation through analog computing, so that applicability of analog computing can be improved.

In a possible implementation, the input analog signal may be an input optical analog signal. The digital-to-analog conversion module may include a mantissa conversion unit, a gain adjustment unit, and an electrical-to-optical conversion unit. The mantissa conversion unit may be configured to convert the mantissa part of the input floating-point number into the initial analog signal. The gain adjustment unit may be configured to perform gain adjustment on the initial analog signal based on the exponent part of the input floating-point number, to obtain an input electrical analog signal. The electrical-to-optical conversion unit may be configured to convert the input electrical analog signal into the input optical analog signal.

In the foregoing implementation, the digital-to-analog conversion module may convert the input floating-point number into the input optical analog signal, and complete floating-point computation through optical computing. The mantissa conversion unit may be implemented with reference to the mantissa conversion unit in the foregoing implementations, and the gain adjustment unit may be implemented with reference to the gain adjustment unit in the foregoing implementations.

In a possible implementation, the analog computing module uses an optical computing link.

In the foregoing implementation, the analog computing module may use the optical computing link, and the optical computing link completes floating-point computation through analog computing, so that applicability of analog computing can be further improved.

In a possible implementation, the computing apparatus may further include an exponent pre-processing module and an exponent post-processing module. The exponent pre-processing module is connected to the digital-to-analog conversion module, and the exponent post-processing module is connected to the analog-to-digital conversion module. The exponent pre-processing module may be configured to: adjust exponent parts of a plurality of to-be-processed floating-point numbers to obtain a plurality of input floating-point numbers, and input the plurality of input floating-point numbers into the digital-to-analog conversion module. The exponent post-processing module may be configured to: receive the result floating-point number output by the analog-to-digital conversion module, and adjust the exponent part of the result floating-point number to obtain a target result floating-point number.

In the foregoing implementation, the exponent pre-processing module may perform exponent pre-processing on the floating-point number in digital domain, so that exponent parts of a plurality of floating-point numbers in a single time of computing is increased or decreased as a whole. In this way, the input floating-point number may be more suitable for the analog computing module, and the analog computing module outputs a more accurate computation result, thereby improving reliability of an analog computational process.

In a possible implementation, the exponent pre-processing module may be configured to: when each of the exponent parts of the plurality of to-be-processed floating-point numbers is less than or equal to a specified threshold, increase the exponent parts of the plurality of to-be-processed floating-point numbers by a same reference value to obtain the plurality of input floating-point numbers. The reference value is determined based on a largest value in the exponent parts of the plurality of to-be-processed floating-point numbers.

The exponent post-processing module may be configured to reduce the exponent part of the result floating-point number by the reference value.

In the foregoing implementation, if the exponent parts of the plurality of to-be-processed floating-point numbers are all small, the exponent parts of the plurality of to-be-processed floating-point numbers may be increased as a whole to obtain the plurality of input floating-point numbers, so that after the analog-to-digital conversion module converts the input floating-point numbers, an obtained input analog signal is large, and a signal-to-noise ratio in the analog computational process can be improved.

In a possible implementation, the input floating-point numbers may include a first group of input floating-point numbers and a second group of input floating-point numbers. The analog computing module may be configured to perform vector multiplication on the first group of input floating-point numbers and the second group of input floating-point numbers. The exponent pre-processing module may be configured to: adjust exponent parts of a plurality of first to-be-processed floating-point numbers based on a first value to obtain the first group of input floating-point numbers, and adjust exponent parts of a plurality of second to-be-processed floating-point numbers based on a second value to obtain the second group of input floating-point numbers.

The exponent post-processing module may be configured to adjust the exponent part of the result floating-point number based on the first value and the second value.

In the foregoing implementation, when vector multiplication is performed on the first group of input floating-point numbers and the second group of input floating-point numbers, if exponent parts of the first group of input floating-point numbers are adjusted based on the first value, and exponent parts of the second group of input floating-point numbers are adjusted based on the second value, when a computation result is output, the exponent part of the result floating-point numbers may be adjusted based on the first value and the second value, to obtain an accurate computation result.

According to a second aspect, this application provides a computing chip. The computing chip may include the computing apparatus provided in the first aspect.

According to a third aspect, this application provides a floating-point computation method. The floating-point computation method may be applied to the computing apparatus provided in the first aspect or the computing chip provided in the second aspect. The method may include:

> converting a mantissa part of an input floating-point number into an initial analog signal;
> performing gain adjustment on the initial analog signal based on an exponent part of the input floating-point number, to obtain an input analog signal;
> performing analog computing based on the input analog signal to obtain a computation result analog signal; and
> converting the computation result analog signal into a result floating-point number.

In a possible implementation, when the computation result analog signal is converted into the result floating-point number, a voltage value corresponding to a mantissa part of the result floating-point number and an exponent part of the result floating-point number may be determined based on the computation result analog signal, and then the mantissa part of the result floating-point number is output based on the voltage value corresponding to the mantissa part of the result floating-point number.

In a possible implementation, the computation result analog signal may be an output current analog signal, and the voltage value corresponding to the mantissa part of the result floating-point number and the exponent part of the result floating-point number may be separately determined in the following manner:

> cyclically performing the following steps over a specified period of time: integrating the output current analog signal based on a first ratio parameter, to obtain a first voltage, and adjusting the first ratio parameter based on variation of the first voltage;
> determining, based on the first voltage obtained upon expiration of the specified period of time, the voltage value corresponding to the mantissa part of the result floating-point number; and
> outputting the exponent part of the result floating-point number based on the first ratio parameter corresponding to the expiration of the specified period of time.

In another possible implementation, the computation result analog signal may be an output current analog signal, and the voltage value corresponding to the mantissa part of the result floating-point number and the exponent part of the result floating-point number may be separately determined in the following manner:

> cyclically performing the following steps: converting the output current analog signal into a second voltage based on a second ratio parameter, and adjusting the second ratio parameter based on variation of the second voltage until a variation amplitude of the second voltage is less than or equal to a specified voltage amplitude threshold;
> determining, based on the second voltage whose variation amplitude is less than or equal to the specified voltage amplitude threshold, the voltage value corresponding to the mantissa part of the result floating-point number; and
> outputting the exponent part of the result floating-point number based on the second ratio parameter when the variation amplitude of the second voltage is less than or equal to the specified voltage amplitude threshold.

In another possible implementation, the computation result analog signal may be an output current analog signal, and the voltage value corresponding to the mantissa part of the result floating-point number and the exponent part of the result floating-point number may be separately determined in the following manner:

> cyclically performing the following steps: adjusting, based on a third ratio parameter, a first current obtained based on the output current analog signal, and adjusting the third ratio parameter based on variation of the first current until a variation amplitude of the first current is less than or equal to a specified current amplitude threshold;
> determining, based on the first current whose variation amplitude is less than or equal to the specified current amplitude threshold, the voltage value corresponding to the mantissa part of the result floating-point number; and
> outputting the exponent part of the result floating-point number based on the third ratio parameter when the variation amplitude of the first current is less than or equal to the specified current amplitude threshold.

In a possible implementation, the input analog signal may be an input optical analog signal. When the input floating-point number is converted into the input analog signal, the input floating-point number may be converted into an input electrical analog signal, and the input electrical analog signal may be converted into the input optical analog signal.

In a possible implementation, the computation result analog signal may be an output optical analog signal. After the output optical analog signal is obtained, the voltage value corresponding to the mantissa part of the result floating-point number and the exponent part of the result floating-point number may be determined based on the output optical analog signal, and the mantissa part of the result floating-point number is output based on the voltage value corresponding to the mantissa part of the result floating-point number.

In a possible implementation, the voltage value corresponding to the mantissa part of the result floating-point number and the exponent part of the result floating-point number may be determined in the following manner:

converting the output optical analog signal into an output current analog signal; and
determining, based on the output current analog signal, the voltage value corresponding to the mantissa part of the result floating-point number and the exponent part of the result floating-point number.

In another possible implementation, the voltage value corresponding to the mantissa part of the result floating-point number and the exponent part of the result floating-point number may be separately determined in the following manner:

cyclically performing the following steps: converting the output optical analog signal into a current signal based on a fourth ratio parameter, converting the current signal into a third voltage, and adjusting the fourth ratio parameter based on variation of the third voltage until a variation amplitude of the third voltage is less than or equal to a specified amplitude threshold;
determining, based on the third voltage whose variation amplitude is less than or equal to the specified amplitude threshold, the voltage value corresponding to the mantissa part of the result floating-point number; and
outputting the exponent part of the result floating-point number based on the fourth ratio parameter when the variation amplitude of the third voltage is less than or equal to the specified amplitude threshold.

In a possible implementation, the input analog signal may be an input voltage analog signal. When the input floating-point number is converted into the input analog signal, the mantissa part of the input floating-point number may be converted into an initial voltage analog signal; and gain adjustment is performed on the initial voltage analog signal based on the exponent part of the input floating-point number, to obtain the input voltage analog signal.

In a possible implementation, the input analog signal may be an input current analog signal. When the input floating-point number is converted into the input analog signal, the mantissa part of the input floating-point number may be converted into an initial current analog signal; and gain adjustment is performed on the initial current analog signal based on the exponent part of the input floating-point number, to obtain the input current analog signal.

In a possible implementation, before converting the input floating-point number into the input analog signal, the floating-point computation method may further include:

obtaining a plurality of to-be-processed floating-point numbers; and
adjusting exponent parts of the plurality of to-be-processed floating-point numbers to obtain a plurality of input floating-point numbers.

In a possible implementation, after converting the computation result analog signal into the result floating-point number, the floating-point computation method may further include:
adjusting the exponent part of the result floating-point number to obtain a target result floating-point number.

In a possible implementation, after the plurality of to-be-processed floating-point numbers are obtained, if each of the exponent parts of the plurality of to-be-processed floating-point numbers is less than or equal to a specified threshold, a reference value may be determined based on a largest value in the exponent parts of the plurality of to-be-processed floating-point numbers; and the exponent parts of the plurality of to-be-processed floating-point numbers are all increased by the reference value.

In a possible implementation, after the computation result analog signal is converted into the result floating-point number, the exponent part of the result floating-point number may be reduced by the foregoing reference value, to obtain the target result floating-point number.

For technical effects that can be achieved in either one of the second aspect and the third aspect, refer to the descriptions of the beneficial effects in the first aspect. Details are not described herein again.

BRIEF DESCRIPTION OF DRAWINGS

FIG. 1 is a diagram of a structure of a computing chip according to an embodiment of this application;

FIG. 2 is a diagram of a structure of a computing apparatus according to an embodiment of this application;

FIG. 3 is a diagram of a structure of another computing apparatus according to an embodiment of this application;

FIG. 4 is a diagram of a structure of another computing apparatus according to an embodiment of this application;

FIG. 5 is a diagram of a structure of another computing apparatus according to an embodiment of this application;

FIG. 6 is a diagram of a circuit structure of a digital-to-analog conversion module according to an embodiment of this application;

FIG. 7 is a diagram of a circuit structure of an analog computing module according to an embodiment of this application;

FIG. 8 is a diagram of a circuit structure of another analog computing module according to an embodiment of this application;

FIG. 9 is a diagram of a circuit structure of an analog-to-digital conversion module according to an embodiment of this application;

FIG. 10 is a diagram of voltage changes in different phases of analog-to-digital conversion according to an embodiment of this application;

FIG. 11 is a diagram of voltage changes in different phases of another analog-to-digital conversion according to an embodiment of this application;

FIG. 12 is a diagram of a structure of another computing apparatus according to an embodiment of this application;

FIG. 13 is a diagram of a circuit structure of another digital-to-analog conversion module according to an embodiment of this application;

FIG. 14 is a diagram of a circuit structure of another digital-to-analog conversion module according to an embodiment of this application;

FIG. 15 is a diagram of a circuit structure of a current mirror structure according to an embodiment of this application;

FIG. 16 is a diagram of a structure of another analog-to-digital conversion module according to an embodiment of this application;

FIG. 17 is a diagram of a circuit structure of another analog-to-digital conversion module according to an embodiment of this application;

FIG. 18 is a diagram of a circuit structure of another analog-to-digital conversion module according to an embodiment of this application;

FIG. 19 is a diagram of a structure of another computing apparatus according to an embodiment of this application;

FIG. 20 is a diagram of a structure of an optical computing link according to an embodiment of this application;

FIG. 21 is a diagram of a structure of another computing apparatus according to an embodiment of this application;

FIG. 22 is a diagram of a structure of another analog-to-digital conversion module according to an embodiment of this application;

FIG. 23 is a diagram of a correspondence between a conversion ratio parameter and a bias voltage according to an embodiment of this application;

FIG. 24 is a diagram of a structure of another computing apparatus according to an embodiment of this application;

FIG. 25 is a schematic flowchart of an exponent pre-processing process according to an embodiment of this application; and

FIG. 26 is a schematic flowchart of a floating-point computation method according to an embodiment of this application.

DESCRIPTION OF EMBODIMENTS

To make the objectives, technical solutions, and advantages of embodiments of this application clearer, the following describes embodiments of this application in detail with reference to the accompanying drawings. Terms used in embodiments of this application are merely intended to explain specific embodiments of this application, but are not intended to limit this application.

In embodiments of this application, "a plurality of" means two or more. In view of this, in embodiments of this application, "a plurality of' may also be understood as "at least two". "At least one" may be understood as one or more, for example, one, two, or more. For example, "include at least one" means "include one, two, or more", and there is no limitation on which is included. For example, "include at least one of A, B, and C" may mean "include A, B, or C", "include A and B, A and C, or B and C", or "include A, B, and C". The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects.

Unless otherwise specified, ordinal numbers such as "first" and "second" in embodiments of this application are used to distinguish between a plurality of objects, and are not intended to limit a sequence, a time sequence, priorities, or importance of the plurality of objects.

Currently, floating-point numbers are widely used in computer systems. Usually, a floating-point number may be represented by a mantissa part and an exponent part. For example, a floating-point number $a$ may be represented as $a = m \times b^e$, where b is a base of a counting system. In a counting system, all floating-point numbers may use a same base. Therefore, when a floating-point number is stored, a value of the base does not need to be separately stored. In a computer system, a binary representation method is usually used, that is, a value of b may be 2. In different computer systems, values of b may be different. For example, the value of $b$ may be 3, 4, or 8. $e$ is a value of an exponent part, and indicates an integer exponent of $b$. m is a value of a mantissa part, and m may be a p-digit number like $\pm dd... ddd,$ where p is precision, and indicates a quantity of digits for storing the floating-point number. Each digit d in the p-digit number may be an integer ranging from 0 to $b$ - 1, including 0 and b - 1. If a 1$^{st}$ digit of m is a non-zero integer, m may be referred to as a normalized mantissa. To represent positivity and negativity of a value, some floating-point numbers may further include a separate sign (sign) bit s, where s represents + or -. For example, in the IEEE-754 standard, a floating-point number may be represented as $(-1)^s \times m \times b^e$.

To meet different requirements of different services for data precision, a computer may support a plurality of types of floating-point numbers, such as a single-precision floating point (32 bits) and a double-precision floating point (64 bits). Bit widths of parts of different types of floating-point numbers are different. As shown in Table 1, BF16 may also be referred to as brain float16 or b float16, and is a new floating-point representation type.

Table 1

| Type | Sign bit s | Exponent part e | Mantissa part $m$ | Total bits |
|---|---|---|---|---|
| Half (half) precision (IEEE 754-2008) | 1 | 5 | 10 | 16 |
| Single-precision (Single) | 1 | 8 | 23 | 32 |
| Double precision (Double) | 1 | 11 | 52 | 64 |
| x86 extended precision (Extended precision) | 1 | 15 | 64 | 80 |
| Quadratic precision (Quad) | 1 | 15 | 112 | 128 |
| BF16 | 1 | 8 | 7 | 16 |

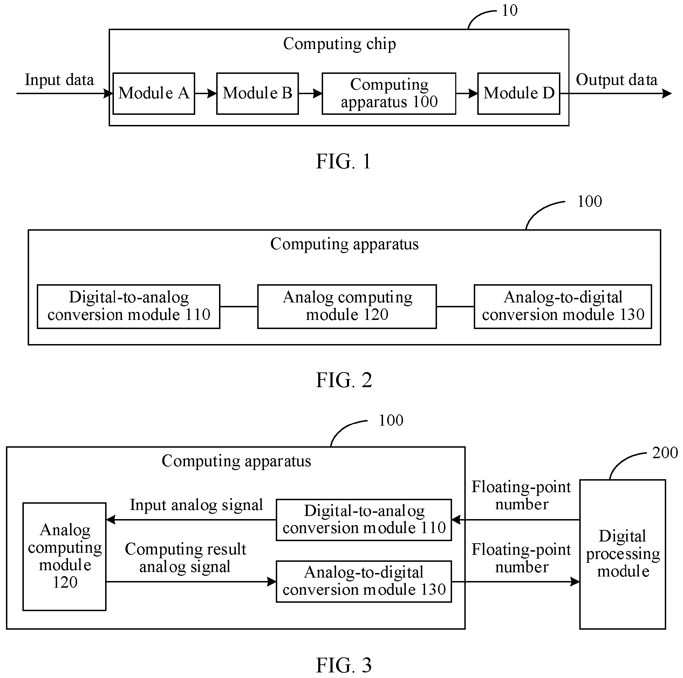

Operations performed by using floating points may be referred to as floating-point computation, and the floating-point computation may usually include multiplication and addition. To improve operation efficiency of a floating-point computational process, embodiments of this application provide a computing apparatus. The computing apparatus provided in embodiments of this application is applicable to various fields in which floating-point computation is used. For example, as shown in FIG. 1, a computing apparatus 100 provided in embodiments of this application may be used in a computing chip 10. For example, the computing chip 10 may be a processor chip, for example, a central processing unit (central processing unit, CPU) chip, a graphics processing unit (graphics processing unit, GPU) chip, a digital signal processor (digital signal processor, DSP) chip, or an artificial intelligence (artificial intelligence, AI) chip. The computing apparatus 100 may be understood as a computing module in the computing chip 10. In addition to the computing apparatus 100, the computing chip 10 shown in FIG. 1 may further include a plurality of modules such as a module A, a module B, and a module D. The module A, the module B, and the module D may be understood as functional modules in the computing chip 10.

For example, in some embodiments, when the computing chip 10 is a CPU chip, the module A may be an address translation module, the module B may be a memory reading module, and the module D may be a memory writing module. When the computing chip 10 is configured to perform floating-point computation, the module A may be configured to determine a storage address of a floating-point number. The module B may read the floating-point number from the storage address determined by the module A, and input the read floating-point number into the computing apparatus 100. The computing apparatus 100 is configured to: perform floating-point computation on the input floating-point number to obtain a result floating-point number, and transmit the result floating-point number to the module D. The module D may be configured to store the result floating-point number into a memory.

The computing chip 10 shown in FIG. 1 is merely an example for description, and does not constitute a specific limitation on a structure of a computing chip. In some other embodiments of this application, the computing chip may include more or fewer components than those shown in the figure, or some components may be combined, or some components may be split, or different component arrangements may be used. This is not limited in this application.

An internal structure of the computing apparatus 100 is shown in FIG. 2, and may include a digital-to-analog conversion module 110, an analog computing module 120, and an analog-to-digital conversion module 130. The digital-to-analog conversion module 110 may be configured to convert an input floating-point number into an input analog signal. The analog computing module 120 may be configured to perform analog computing based on the input analog signal to obtain a computation result analog signal. The analog-to-digital conversion module 130 may be configured to convert the computation result analog signal into a result floating-point number. The input floating-point number is converted into the input analog signal, and the computing of the floating-point number is completed in analog domain. This can improve computational efficiency. In some embodiments, the computing apparatus 100 may include one digital-to-analog conversion module 110, one analog computing module 120, and one analog-to-digital conversion module 130. In some other embodiments, the computing apparatus 100 may include a plurality of digital-to-analog conversion modules 110, an analog computing module 120 may include a plurality of input ends, and each input end is configured to be connected to one digital-to-analog conversion module. In some other embodiments, the computing apparatus 100 may include a plurality of analog-to-digital conversion modules 130, the analog-to-digital conversion module 130 may include a plurality of output ends, and each output end is configured to be connected to one analog-to-digital conversion module.

In some embodiments, as shown in FIG. 3, the computing apparatus 100 provided in embodiments of this application may be connected to a digital processing module 200. The digital processing module 200 may transmit a floating-point number to the digital-to-analog conversion module 110 in the computing apparatus 100. The digital-to-analog conversion module 110 may convert an input floating-point number into an input analog signal like a voltage, a current, or light, and transmit the input analog signal to the analog computing module 120. The analog computing module 120 may perform analog computing based on the input analog signal to obtain a computation result analog signal, where the computation result analog signal may be an analog signal like a voltage, a current, or light. The analog computing module 120 transmits the computation result analog signal to the analog-to-digital conversion module 130. The analog-to-digital conversion module 130 may convert the computation result analog signal into a floating-point number, and then transmit the floating-point number to the digital processing module 200, to complete a computational process of the floating-point number.

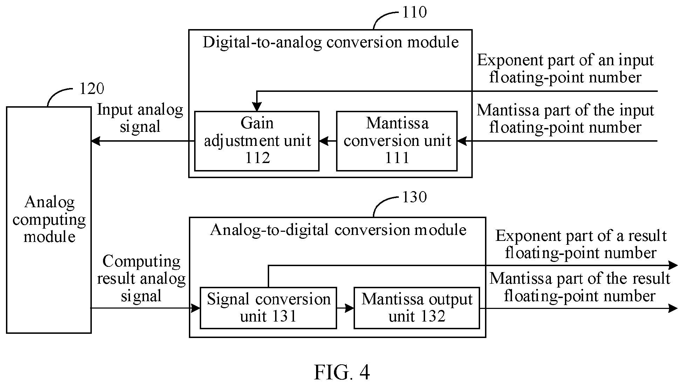

When converting the input floating-point number into the input analog signal, the digital-to-analog conversion module 110 may separately process a mantissa part of the input floating-point number and an exponent part of the input floating-point number. As shown in FIG. 4, the digital-to-analog conversion module 110 may include a mantissa conversion unit 111 and a gain adjustment unit 112. The mantissa conversion unit 111 may be configured to convert the mantissa part of the input floating-point number into an initial analog signal. The gain adjustment unit 112 may be configured to perform gain adjustment on the initial analog signal based on the exponent part of the input floating-point number, to obtain the input analog signal. The analog computing module 120 may perform analog computing based on the input analog signal to obtain the computation result analog signal.

When converting the computation result analog signal into a result floating-point number, the analog-to-digital conversion module 130 may separately determine a mantissa part of the result floating-point number and an exponent part of the result floating-point number based on the computation result analog signal. The analog-to-digital conversion module 130 may process an analog signal with a large dynamic range. For example, the analog signal is a current analog signal. The following several current analog signals exist: [0, 100$nA$] , [0, 400$nA$] , and [0, 6.4uA]. Dynamic ranges of the current analog signals are large, and the analog-to-digital conversion module 130 represents the current analog signals by using floating points. In floating-point representation, the several current analog signals may correspond to [0, 100$nA$] $\times$ 2$^0$ , [0, 100$nA$] $\times$ 2$^2$, and [0, 100$nA$] $\times$ 2$^6$, to correspond to the foregoing floating-point domain digital representation in which the floating-point number represents the analog signal with the large dynamic range based on variation of the exponent part of the result floating-point number. As shown in FIG. 4, the analog-to-digital conversion module 130 may include a signal conversion unit 131 and a mantissa output unit 132. The signal conversion unit 131 may be configured to: quickly match, based on the computation result analog signal, a ratio parameter corresponding to the computation result analog signal, so that a voltage value corresponding to the mantissa part of the result floating-point number is a value in a fixed dynamic range; transmit the voltage value corresponding to the mantissa part of the result floating-point number to the mantissa output unit 132; and output the exponent part of the result floating-point number based on the finally matched ratio parameter of the computation result analog signal. The mantissa output unit 132 may be configured to output the mantissa part of the result floating-point number based on the voltage value corresponding to the mantissa part of the result floating-point number.

In some embodiments, if the computation result analog signal is an output current analog signal, the signal conversion unit may include a first conversion unit and a first dynamic adjustment unit. The first conversion unit may be configured to convert the output current analog signal into a voltage signal. The first dynamic adjustment unit may be configured to adjust, based on variation of the voltage signal output by the first conversion unit, a conversion ratio parameter of the first conversion unit for the output current analog signal. The conversion ratio parameter represents the exponent part of the result floating-point number, and the voltage signal output by the first conversion unit represents the voltage value corresponding to the mantissa part of the result floating-point number.

In some other embodiments, if the computation result analog signal is an output optical analog signal, the signal conversion unit may include a first optical-to-electrical conversion unit and an electrical-to-digital conversion unit. The first optical-to-electrical conversion unit may be configured to convert the output optical analog signal into an output current analog signal. The electrical-to-digital conversion unit may be configured to: determine, based on the output current analog signal, the voltage value corresponding to the mantissa part of the result floating-point number, and output the exponent part of the result floating-point number.

The following describes a structure of the computing apparatus 100 in detail by using several optional specific embodiments. In a specific embodiment, an example in which a value of a base b of a floating-point number is 2 is used for description. First, an example in which both an input analog signal and a computation result analog signal of the analog computing module 120 are electrical analog signals is used for description.

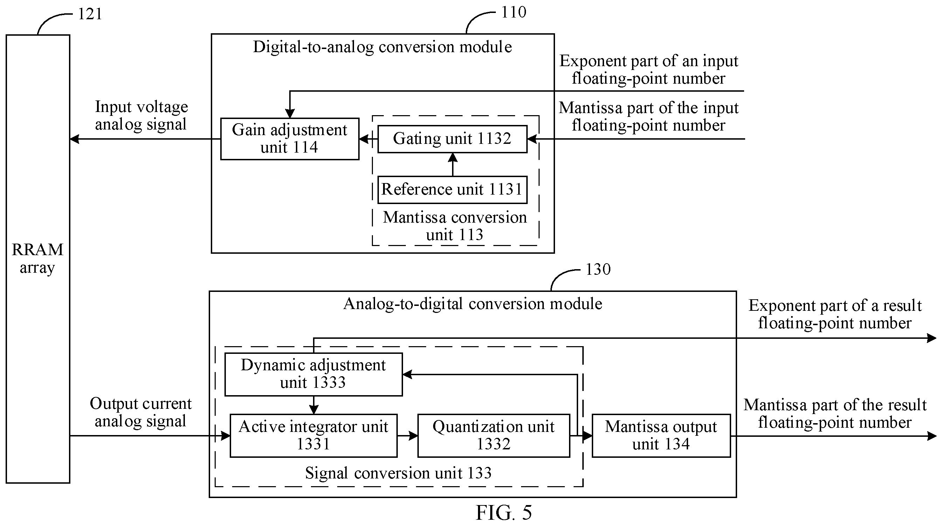

In a first optional embodiment, as shown in FIG. 5, the analog computing module may use a resistive random access memory (resistive random access memory, RRAM) array 121. An input analog signal of the RRAM array 121 may be a voltage analog signal, in other words, the digital-to-analog conversion module 110 may be configured to convert an input floating-point number into an input voltage analog signal.

As shown in FIG. 5, the digital-to-analog conversion module 110 may include a mantissa conversion unit 113 and a gain adjustment unit 114. The mantissa conversion unit 113 may be configured to convert a mantissa part of the input floating-point number into an initial voltage analog signal. The gain adjustment unit 114 may be configured to perform gain adjustment on the initial voltage analog signal based on an exponent part of the input floating-point number, to obtain the input voltage analog signal. The mantissa conversion unit 113 may be implemented by using a fixed-point digital-to-analog converter (digital-to-analog converter, DAC), or may include a reference unit 1131 and a gating unit 1132. The reference unit 1131 is configured to provide an equal-difference voltage for the gating unit 1132. The gating unit 1132 is configured to convert, based on the equal-difference voltage provided by the reference unit 1131, the mantissa part of the input floating-point number into the initial voltage analog signal.

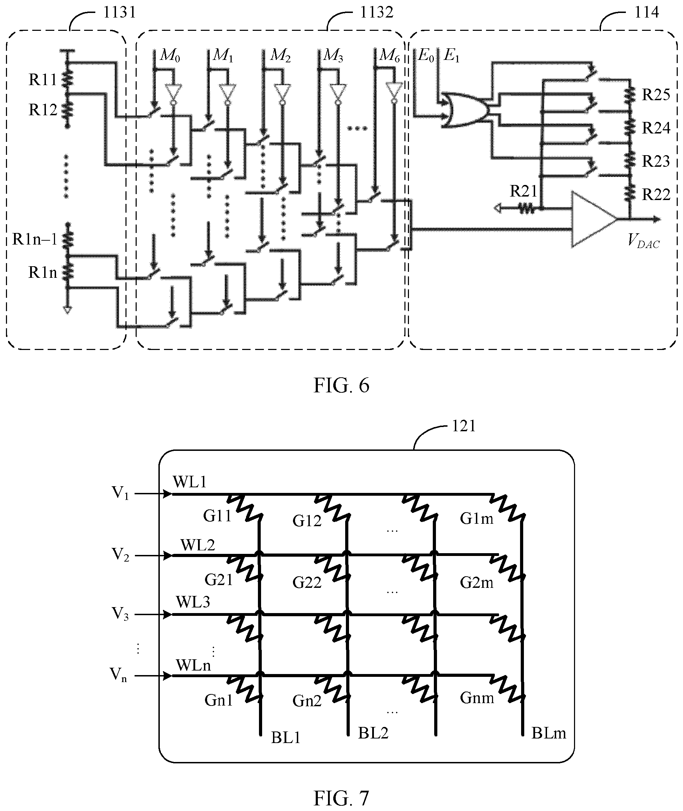

In some embodiments, a circuit structure of the digital-to-analog conversion module 110 may be shown in FIG. 6. The reference unit 1131 may generate a plurality of equal-difference voltages in a form of resistance voltage division. The reference unit 1131 may include a plurality of resistors, for example, a resistor R11 to a resistor R1n shown in FIG. 6. The plurality of resistors are connected in series, and resistance values of the plurality of resistors are the same. A connection point between two adjacent resistors is used to output a voltage, and voltage values output by connection points between different resistors are different. Therefore, a plurality of equal-difference voltages can be output. The gating unit 1132 may include a plurality of switch-controlled branches. A quantity of the switch-controlled branches may be determined based on a quantity of bits (namely, precision p) of the mantissa part m of the input floating-point number. Assuming that the quantity of bits of the mantissa part m of the input floating-point number is seven bits (bits), which are respectively $M_0$ to $M_6$, the gating unit 1132 may include seven switch-controlled branches, each switch-controlled branch correspondingly receives data of one data bit of the mantissa part m of the input floating-point number, and the seven switch-controlled branches are respectively configured to receive data of the seven data bits $M_0$ to $M_6$ of the mantissa part m. Each switch-controlled branch further includes a first branch and a second branch, where the first branch is configured to receive the data of the data bit corresponding to the mantissa part m of the input floating-point number, and the second branch is configured to receive, through a reverser, the data of the data bit corresponding to the mantissa part of the input floating-point number m. Each of the first branch and the second branch includes at least one switch, quantities of switches included in the first branch and the second branch in a same switch-controlled branch are equal, quantities of switches included in different switch-controlled branches decrease in ascending order of distances between the switch-controlled branches and the reference unit, and a first branch and a second branch of a switch-controlled branch that is farthest from the reference unit each include one switch. The switch may use a triode or a transistor. Switches in the plurality of switch-controlled branches are separately connected to connection points between every two resistors in the reference unit 1131 in a cascading manner. The plurality of switch-controlled branches may control, based on the received mantissa part of the input floating-point number, a corresponding switch to be turned on or turned off, to control a magnitude of the initial voltage analog signal output based on the equal-difference voltage.

For example, it is assumed that a voltage of 1 V and a voltage of 2 V are respectively input to two ends of the reference unit, in other words, the reference unit 1131 may generate a plurality of equal-difference voltages within a range of [1 V, 2 V). If the quantity of bits of the mantissa part m of the input floating-point number is seven bits, the reference unit 1131 may generate $2^7 = 128$ equal-difference voltages within the range of [1 V, 2 V). In this case, a value represented by the seven bits of the mantissa part m of the input floating-point number may be within a range of [0, 128]. Assuming that the value represented by the mantissa part of the input floating-point number is 60, the magnitude of the initial voltage analog signal output by the gating unit 1132 may be as follows:

$$1V + \frac{60*(2V-1V)}{128} = 1.469V$$

The gain adjustment unit 114 may use a programmable gain amplifier (programmable gain amplifier, PGA), and the PGA performs gain adjustment by using an operational amplifier (operating amplifier, OPA) in conjunction with a multiplier resistor. As shown in FIG. 6, the gain adjustment unit 114 may include an operational amplifier OPA1 and a plurality of feedback resistor branches. A first input end of the operational amplifier OPA1 is connected to an output end of the gating unit 1132, and a second input end of the operational amplifier OPA1 is connected to a reference resistor R21. Each of the plurality of feedback resistor branches may include a switch and a feedback resistor that are connected in series. The switch may use a triode or a transistor. Resistance values of feedback resistors in the plurality of feedback resistor branches are in a multiple relationship, so that the feedback resistors may be referred to as multiplier resistors. For example, a resistance value of a resistor R22 in a first feedback resistor branch may be R, a resistance value of a resistor R23 in a second feedback resistor branch may be R, a resistance value of a resistor R24 in a third feedback resistor branch may be 2R, and a resistance value of a resistor R25 in a fourth feedback resistor branch may be 4R. A first end of each of the plurality of feedback resistor branches is connected to a second input end of the operational amplifier OPA1, and a second end of each of the plurality of feedback resistor branches is connected to an output end of the operational amplifier OPA1. Switches in the plurality of feedback resistor branches may be connected to an output end of an OR gate, and a plurality of input ends of the OR gate are configured to receive the exponent part of the input floating-point number. An OR gate in the gain adjustment unit 114 shown in FIG. 6 includes two input ends, which are respectively configured to receive data of two data bits $E_0$ and $E_1$ of the exponent part of the input floating-point number, and an output end of the OR gate is configured to: output a control signal based on the exponent part of the input floating-point number, and control switches of a part or all of the plurality of feedback resistor branches to be turned on, to perform gain adjustment on the initial voltage analog signal output by the gating unit 1132, so as to obtain an input voltage analog signal $V_{DAC}$. In the foregoing example, the feedback resistor may be selected from R to 8R.

For example, when a value represented by the exponent part of the input floating-point number is 2, that is, $2^2$, assuming that a resistance value of the reference resistor R21 is R, the output end of the OR gate may turn on, based on the value 2 of the exponent part of the input floating-point number, a switch of the feedback resistor branch to which the feedback resistor R25 with the resistance value of 4R belongs, in other words, the resistance value of the reference resistor is R, and the resistance value of the feedback resistor is 4R, so that the resistance value of the feedback resistor and the resistance value of the reference resistor satisfies a ratio of 4. In this case, a voltage analog signal output by the operational amplifier OPA1 is four times the initial voltage analog signal input to the operational amplifier OPA1. If the initial voltage analog signal output by the gating unit 1132 is 1.469 V, the gain adjustment unit 114 may amplify the initial voltage analog signal of 1.469 V to 5.875 V. For another example, when a value represented by the exponent part of the input floating-point number is -2, that is, $2^{-2}$, assuming that a resistance value of the reference resistor R21 is 4R, the output end of the OR gate may turn on, based on the value -2 of the exponent part of the input floating-point number, a switch of the feedback resistor branch to which the feedback resistor R22 with the resistance value of R belongs, in other words, the resistance value of the reference resistor is 4R, and the resistance value of the feedback resistor is R, so that the resistance value of the feedback resistor and the resistance value of the reference resistor satisfies a ratio of 1/4. In this case, a voltage analog signal output by the operational amplifier OPA1 is 1/4 of the initial voltage analog signal input to the operational amplifier OPA1. If the initial voltage analog signal output by the gating unit 1132 is 1.469 V, the gain adjustment unit 114 may reduce the initial voltage analog signal of 1.469 V to 0.367 V.

In the foregoing embodiment, the feedback resistor may be selected from R to 8R. In another embodiment, the feedback resistor may alternatively be configured to be R/2R/4R/8R/16R adjustable. For example, the gain adjustment unit 114 may include four feedback resistor branches. A resistance value of a resistor R22 in a first feedback resistor branch may be R, a resistance value of a resistor R23 in a second feedback resistor branch may be 2R, a resistance value of a resistor R24 in a third feedback resistor branch may be 4R, and a resistance value of a resistor R25 in a fourth feedback resistor branch may be 8R.

In the embodiment shown in FIG. 6, the reference resistor connected to the operational amplifier OPA1 uses a fixed resistance value, and the resistance value of the feedback resistor may be adjusted based on the exponent part of the input floating-point number. In another embodiment, the feedback resistor connected to the operational amplifier OPA1 may alternatively use a fixed resistance value, and the resistance value of the reference resistor may be adjusted based on the exponent part of the input floating-point number; or both the feedback resistor connected to the operational amplifier OPA1 and the resistance value of the reference resistor may be adjusted.

In the foregoing process, the digital-to-analog conversion module 110 may convert the input floating-point number into the input voltage analog signal $V_{DAC}$, and transmit the input voltage analog signal $V_{DAC}$ to the analog computing module, namely, the RRAM array 121 shown in FIG. 5. The RRAM array 121 is a storage and computing integrated array composed of storages, is a multiplier and accumulation (multiplier and accumulation) hardware accelerator based on analog computing, and is configured to implement multiplication and addition operations of data by using voltage analog signals. The multiplication and addition operations of data are widely applied in neural network computing.

In some embodiments, a structure of the RRAM array may be shown in FIG. 7. The RRAM array 121 may include a plurality of units, such as $G_{11}$, $G_{12}$, and $G_{21}$. The unit is located at a row-column crosspoint of the RRAM array, and may use a conductive device. Each row of the RRAM array may be referred to as a word line (word line, WL), and each column of the RRAM array may be referred to as a bit line (bit line, BL). If the RRAM array 121 includes n rows and m columns, in other words, n word lines WL1 to WLn and m bit lines BL1 to BLm, the RRAM array 121 may include n*m units. Before floating-point number computation, an analog value of parameter data may be pre-stored in the RRAM array 121. For example, in neural network computing creation, the parameter data may be a weight in a neural network model, and the weight may be input to the RRAM array 121 from a bit line (column) of the RRAM array, so that each weight value in the weight is configured in a corresponding unit, in other words, each weight value corresponds to one unit, and each weight value is stored in the corresponding unit in a form of conductance, and may be referred to as a conductance value of a corresponding unit. In some embodiments, when floating-point number computation is performed, computing may be simultaneously performed on a plurality of input floating-point numbers. For example, n input floating-point numbers may be converted into input voltage analog signals through n digital-to-analog conversion modules or one digital-to-analog conversion module, to obtain n input voltage analog signals, which are respectively $V_1$, $V_2$, ..., and $V_n$. The n input voltage analog signals are respectively input to the RRAM array 121 through word lines (rows) of the RRAM array, and after the n input voltage analog signals pass through the RRAM array, a convergence current is generated in each column. According to Ohm's law, a current in column i may be expressed as follows:

$$I_i = [V_1 \quad V_2 \quad \ldots \quad V_n] \times G_i$$

$G_i$ is a vector formed by conductance values of units in column i.

According to Kirchhoff's law, currents in each column may be accumulated. Therefore, a current analog signal output by the RRAM array may be represented as follows:

$$[V_1 \quad V_2 \quad \ldots \quad V_n]_x \begin{bmatrix} G_{11} & G_{12} & \ldots & G_{1m} \\ G_{21} & G_{22} & \ldots & G_{2m} \\ \ldots & \ldots & \ldots & \ldots \\ G_{n1} & G_{n2} & \ldots & G_{nm} \end{bmatrix} = [I_1 \quad I_2 \quad \ldots \quad I_m]$$

In the foregoing process, multiplication and addition operations may be performed on the plurality of input floating-point numbers and reference data pre-stored in the RRAM array. This is equivalent to implementing a convolution operation in a neural network. When the RRAM array includes one row of units, it may be considered that an operation is performed on one input floating-point number and reference data pre-stored in the RRAM array, and a computation result analog signal is output. Computational efficiency of the RRAM array is significantly improved in comparison with that of conventional floating-point computation. When the RRAM array can implement multi-bit programming, computational efficiency of the RRAM array can further be continuously improved. Assuming that the RRAM array can reach eight bits, and both the digital-to-analog conversion module and an analog-to-digital conversion module can implement 8-bit data conversion, the RRAM array may implement 8*8 multiplication on one device, and one RRAM array may implement an 8-bit vector-matrix multiplication operation.

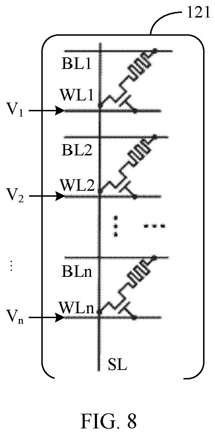

In some other embodiments, the RRAM array 121 may alternatively use a structure shown in FIG. 8. In an RRAM array shown in FIG. 8, a quantity of word lines WLs is the same as a quantity of bit lines BLs. In addition to a conductive device, each unit G in the RRAM array may further include a transistor. Because the transistor has three ends, in addition to the word lines WLs and the bit lines BLs, the RRAM array further includes source lines (source lines, SLs), where a quantity of source lines SLs is also the same as the quantity of word lines WLs and the quantity of bit lines BLs. After an operation is performed in the RRAM array on an input analog signal and an analog value of pre-stored parameter data, a computation result analog signal may be output by the source line SL.

It can be learned from the foregoing descriptions that the computation result analog signal output by the RRAM array 121 is a current analog signal. The RRAM array 121 outputs the computation result analog signal to an analog-to-digital conversion module 130, and the analog-to-digital conversion module 130 converts the computation result analog signal into a result floating-point number.

As shown in FIG. 5, the analog-to-digital conversion module 130 may include a signal conversion unit 133 and a mantissa output unit 134. The signal conversion unit 133 may be configured to: determine, based on the received computation result analog signal, a voltage value corresponding to a mantissa part of the result floating-point number, and output an exponent part of the result floating-point number. The mantissa output unit 134 may be configured to: output the mantissa part of the result floating-point number based on the voltage value corresponding to the mantissa part of the result floating-point number.

The signal conversion unit 133 may include an active integrator unit 1331, a quantization unit 1332, and a dynamic adjustment unit 1333. The active integrator unit 1331 may serve as a first conversion unit, and is configured to convert an output current analog signal $I_{MAC}$ received from the analog computing module into a voltage signal. The quantization unit 1332 may serve as a first quantization unit, and the dynamic adjustment unit 1333 may serve as a first dynamic adjustment unit. The active integrator unit 1331 is connected to an output end of the RRAM array 121, and is configured to: integrate the output current analog signal over a specified period of time $T_s$ to obtain a first voltage, and output the first voltage to the quantization unit 1332. The quantization unit 1332 is configured to transmit a control signal to the dynamic adjustment unit 1333 over the specified period of time $T_s$ based on variation of the first voltage. The dynamic adjustment unit 1333 may also be referred to as a self-adaptation range adjustment unit. The dynamic adjustment unit 1333 is configured to adjust a measurement range of the active integrator unit 1331 over the specified period of time $T_s$ based on the control signal from the quantization unit 1332, in other words, adjust a conversion ratio parameter of the active integrator unit 1331 for the output current analog signal. After the specified period of time $T_s$ arrives, the quantization unit 1332 may be configured to: determine, based on the first voltage output by the active integrator unit 1331 upon expiration of the specified period of time $T_s$, the voltage value corresponding to the mantissa part of the result floating-point number, and output the voltage value to the mantissa output unit 134. The dynamic adjustment unit 1333 may be configured to output the exponent part of the result floating-point number based on the conversion ratio parameter of the active integrator unit 1331 for the output current analog signal upon expiration of the specified period of time $T_s$.

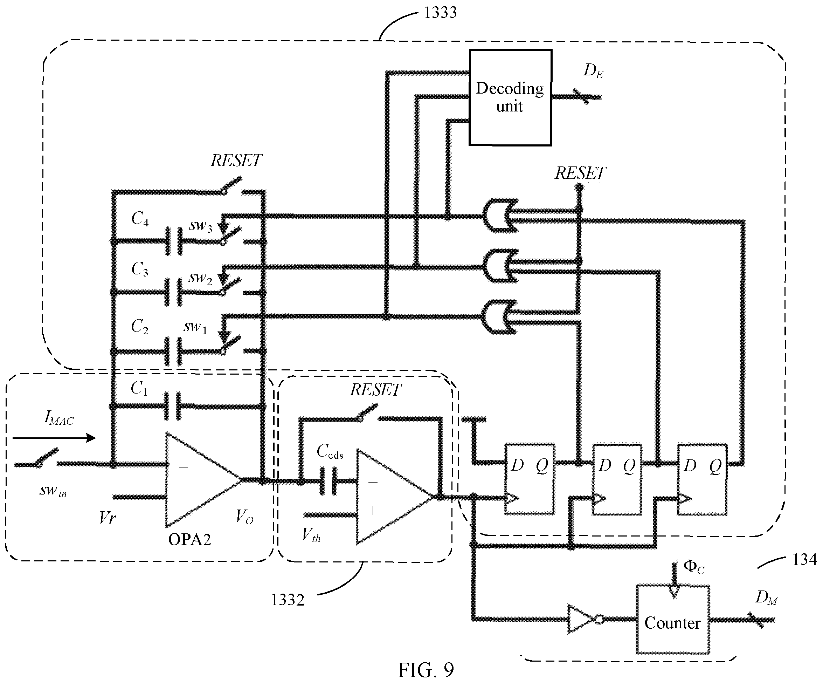

For example, as shown in FIG. 9, the active integrator unit 1331 may include an integrator, and the integrator includes an operational amplifier OPA2 and a capacitor $C_1$ connected between a negative input end and an output end of the operational amplifier OPA2. The negative input end of the operational amplifier OPA2 is connected to the output end of the RRAM array 121, and is configured to receive the computation result analog signal $I_{MAC}$ output by the RRAM array 121. A positive input end of the operational amplifier OPA2 may be connected to a reference voltage generation circuit, and the reference voltage generation circuit provides a reference voltage $V_r$ for the operational amplifier OPA2. The active integrator unit 1331 is configured to integrate the output current analog signal $I_{MAC}$ to output the first voltage $V_O$. The quantization unit 1332 may include a first comparator. A first input end of the first comparator may be connected to an output end of the integrator through a capacitor $C_{cds}$, and is configured to receive the first voltage $V_O$ output by the integrator. A second input end of the first comparator is configured to be connected to a ramp signal generation circuit. The ramp signal generation circuit is configured to: provide a constant voltage $V_{th}$ for the first comparator over the specified period of time $T_s$, and provide, for the first comparator after the specified period of time $T_s$ arrives, a ramp voltage that changes at a specified rate. An output end of the first comparator may output the control signal to the dynamic adjustment unit 1333 based on the change of the first voltage $V_O$. In some embodiments, the computing apparatus may include a plurality of analog-to-digital conversion modules, and one ramp signal generation circuit may be connected to first comparators in the plurality of analog-to-digital conversion modules, to provide, for the plurality of first comparators, the constant voltage $V_{th}$ and the ramp voltage that changes at the specified rate.

The dynamic adjustment unit 1333 may include a plurality of flip-flops and a plurality of capacitor branches, and the flip-flops one-to-one correspond to the capacitor branches. Each capacitor branch includes a capacitor and a switch device that are connected in series, a first end of each capacitor branch is connected to an input end of the integrator, a second end of each capacitor branch is connected to the output end of the integrator, the switch device of each capacitor branch is connected to an output end of one flip-flop, and an input end of each flip-flop is connected to the output end of the first comparator, and is configured to control, under action of the control signal output by the first comparator, a switch device of a corresponding capacitor branch to be turned on or turned off, so that the corresponding capacitor branch is connected or disconnected, to adjust the conversion ratio parameter of the active integrator unit 1331 for the output current analog signal. FIG. 9 shows three flip-flops and three capacitor branches. A first capacitor branch includes a capacitor $C_2$ and a switch device $sw_1$, a second capacitor branch includes a capacitor $C_3$ and a switch device $sw_2$, and a third capacitor branch includes a capacitor $C_4$ and a switch device $sw_3$. An output end of each flip-flop is connected to a switch device of a corresponding capacitor branch through an OR gate.

The dynamic adjustment unit 1333 may further include a decoding unit. The decoding unit is connected to output ends of OR gates corresponding to the plurality of flip-flops. The decoding unit may use a circuit chip that converts a thermometer code into a binary code, and is configured to: read an adjusted conversion ratio parameter, and output the exponent part of the result floating-point number based on the conversion ratio parameter.

The mantissa output unit 134 may include a counter, and the counter is configured to output the mantissa part of the result floating-point number based on the voltage value that corresponds to the mantissa part of the result floating-point number and that is output by the quantization unit. The counter may be connected to an output end of the quantization unit through a reverser. The counter may use a Mbit counter.

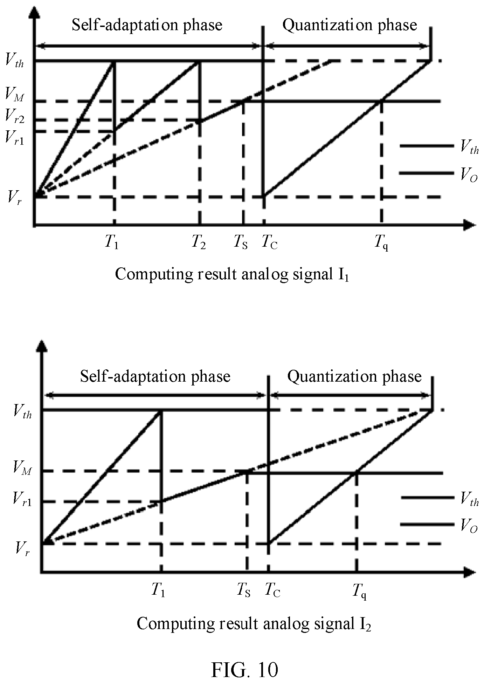

Based on the circuit structure shown in FIG. 9, a process in which the analog-to-digital conversion module 130 converts the computation result analog signal into the result floating-point number may include a self-adaptation phase and a quantization phase. Before each analog-to-digital conversion, the analog-to-digital conversion module can be reset by using a RESET switch in the analog-to-digital conversion module to clear data in the analog-to-digital conversion module and set the voltage $V_O$ to the initial value $V_r$. The specified period of time $T_s$ from a reset moment is the self-adaptation phase of an analog-to-digital conversion process. The specified period of time $T_s$ may be a value preset based on experiments. Variation curves of voltages in the self-adaptation phase and the quantization phase are shown in FIG. 10.

Self-adaptation phase: After a reset operation, the switch device of each capacitor branch is turned off, a measurement range of the active integrator unit is minimized, and the conversion ratio parameter for the output current analog signal is maximized. The switch $sw_{in}$ connected to a negative input end of the integrator is turned on, and the output current analog signal $I_{MAC}$ of the analog computing module is input to the integrator. The integrator integrates the received output current analog signal, stores an integral charge in the capacitor $C_1$, and outputs the first voltage $V_O$ to the first input end of the first comparator. A larger integral charge in the capacitor $C_1$ indicates a larger first voltage $V_O$. The first comparator is configured to compare the first voltage $V_O$ input from the first input end with the constant voltage $V_{th}$ input from the second input end. The first voltage $V_O$ gradually increases. When the first voltage $V_O$ increases to the constant voltage $V_{th}$ (that is, at a moment $T_1$), the first comparator outputs a high level. It may be understood that, each time the first voltage $V_O$ increases to the constant voltage $V_{th}$, the first comparator outputs a high-level control signal to the dynamic adjustment unit. When the dynamic adjustment unit receives a 1st high-level control signal, a 1st flip-flop correspondingly outputs one high-level control signal, controls the switch device $sw_1$ in the first capacitor branch to be turned on, and increases the measurement range of the active integrator unit by one level, in other words, decreases the conversion ratio parameter of the active integrator unit for the output current analog signal by one level, to obtain a new conversion ratio parameter. After the switch device $sw_1$ is turned on, the integral charge is shared between the capacitor $C_1$ and the capacitor $C_2$, to be specific, the integrator integrates the received output current analog signal, and stores the integral charge in the capacitor $C_1$ and the capacitor $C_2$. The first voltage $V_O$ decreases instantaneously to

$$V_{r1} = \frac{C_1}{C_1+C_2}V_{th} + \frac{C_2}{C_1+C_2}V_r$$

. The integrator continues to integrate the received output current analog signal, and the first voltage $V_O$ gradually increases. When the first voltage $V_O$ increases to the constant voltage $V_{th}$ again (that is, at a moment $T_2$), the first comparator outputs a second high-level control signal to the dynamic adjustment unit, and a 2nd flip-flop correspondingly outputs one high-level control signal, controls the switch device $sw_2$ in the second capacitor branch to be turned on, and increases the measurement range of the active integrator unit by one level, in other words, decreases the conversion ratio parameter of the active integrator unit for the output current analog signal by one level. In this case, the first voltage $V_O$ decreases instantaneously to $V_{r2} = \frac{C_1+C_2}{C_1+C_2+C_2}V_{th} + \frac{C_3}{C_1+C_2+C_2}V_r$ . The rest may be deduced by analogy until the specified period of time $T_s$ elapses.

Quantization phase: After the specified period of time $T_s$ elapses, assuming that a value of the first voltage $V_O$ output by the integrator is $V_M$ upon expiration of the specified period of time $T_s$, the switch $sw_{in}$ connected to the negative input end of the integrator is turned off, so that the first voltage $V_O$ remains unchanged at $V_M$. To avoid interference and errors, at a moment $T_c$ in short time after the specified period of time $T_s$, the voltage $V_{th}$ received by the second input end of the first comparator changes from the constant voltage to a single-ramp voltage, to be specific, the single-ramp voltage received by the second input end of the first comparator gradually increases from 0 at a specified rate, until the single-ramp voltage increases to the original constant voltage $V_{th}$. In some embodiments, the ramp signal generation circuit connected to the second input end of the first comparator may include a constant voltage generation circuit and a single-ramp voltage generation circuit. The constant voltage generation circuit is connected to the second input end of the first comparator through a first switch, and the single-ramp voltage generation circuit is connected to the second input end of the first comparator through a second switch. Before the moment $T_c$, the first switch is turned on, the second switch is turned off, and the constant voltage generation circuit provides the constant voltage $V_{th}$ for the second input end of the first comparator. After the moment $T_c$, the second switch is turned on, the first switch is turned off, and the single-ramp voltage generation circuit provides the uniformly changing single-ramp voltage for the second input end of the first comparator. Starting from the moment $T_c$, the counter in the mantissa output unit starts to count at a specified periodicity, and a count value of the counter is incremented by 1 each time the specified periodicity elapses, until the single-ramp voltage input at the second input end of the first comparator increases to the voltage value $V_M$ received by the first input end of the first comparator (that is, at a moment $T_q$), the comparator outputs a high-level control signal, to control the counter to stop counting, and the mantissa output unit outputs a computed value of the counter as the mantissa part $D_M$ of the result floating-point number. At the moment $T_c$, the decoding unit in the dynamic adjustment unit uses a combination of values output by the OR gates corresponding to the plurality of flip-flops as a thermometer code, where the thermometer code represents a current conversion ratio parameter. The decoding unit converts the thermometer code into a binary code, to obtain the exponent part $D_E$ of the result floating-point number.

FIG. 10 shows waveform diagrams of voltage changes in an analog-to-digital conversion process corresponding to two computation result analog signals with different magnitudes. As shown in FIG. 10, when magnitudes of currents $I_1$ and $I_2$ of computation result analog signals output by the analog computing module are different, the currents are triggered to different levels. For example, in a specified period of time $T_s$, the current $I_1$ may trigger switching from a 1st level to a 2nd level at a moment $T_1$, and trigger switching from the 2nd level to a 3rd level at a moment $T_2$, that is, the 3rd level may be triggered to by the current $I_1$. However, over the specified period of time $T_s$, the current $I_2$ may trigger switching from the 1st level to the 2nd level at the moment $T_1$, that is, the 2nd level may be triggered to by the current $I_2$. It can be learned that, over the specified period of time $T_s$, different levels are triggered to by currents with different magnitudes, to correspond to different conversion ratio parameters, so that values of exponent parts of obtained result floating-point numbers are also different.

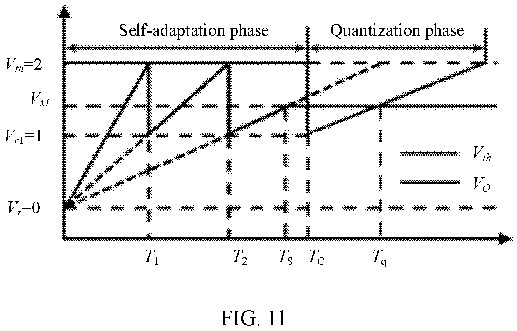

For example, a value of a base b of a floating-point number is 2. In some embodiments, the reference voltage $V_r$ received by the integrator may be set to 0, the constant voltage $V_{th}$ received by the second input end of the first comparator may be set to 2, and the capacitors shown in FIG. 9 are set to $C_1=C_{int}$, $C_2=C_{int}$, $C_3=2C_{int}$, and $C_4=4C_{int}$, so that capacitance values of the capacitor branches are in a multiple relationship. In this way, as shown in FIG. 11, each time the conversion ratio parameter is adjusted, $V_O$ instantaneously decreases from 2 V to 1 V. Therefore, the capacitance values of the capacitor branches are in the multiple relationship, and may be used to perform analog-to-digital conversion on the floating-point number whose base b is 2.

In the embodiment shown in FIG. 9, the first comparator is shared in the self-adaptation phase and the quantization phase. To be specific, as described above, in the self-adaptation phase, the second input end of the first comparator receives the constant voltage $V_{th}$; and in the quantization phase, the second input end of the first comparator receives the ramp voltage that changes at the specified rate. In some other embodiments, a comparator may alternatively be used in each of the self-adaptation phase and the quantization phase. To be specific, the quantization unit 1332 may include a comparator A. A first input end of the comparator A may be connected to the output end of the integrator, and is configured to receive the first voltage $V_O$ output by the integrator. A second input end of the comparator A may receive the constant voltage $V_{th}$. An output end of the comparator A may be connected to a flip-flop, and is configured to provide a control signal for the dynamic adjustment unit in the self-adaptation phase. In addition to the counter, the mantissa output unit 134 may further include a comparator B. A first input end of the comparator B may be connected to the output end of the integrator. A second input end of the comparator B may receive the ramp voltage that changes at the specified rate. An output end of the comparator B may be connected to a counter, and is configured to provide a control signal for the mantissa output unit in the quantization phase.

In the foregoing embodiments, when a floating-point number is used for computing, the digital-to-analog conversion module first converts the input floating-point number into an input analog signal. The digital-to-analog conversion module includes the mantissa conversion unit and the gain adjustment unit. The mantissa conversion unit is configured to: process a mantissa part of the input floating-point number, and convert the mantissa part of the input floating-point number into an initial analog signal. The gain adjustment unit may perform gain adjustment on the initial analog signal in analog domain based on an exponent part of the input floating-point number, to obtain the input analog signal. When exponent parts of input floating-point numbers are different, gain multiples of the gain adjustment unit for initial analog signals are different, and magnitudes of obtained input analog signals are also different. In this way, a plurality of input floating-point numbers with different exponent parts may be converted into a plurality of input analog signals with different magnitudes. After the input floating-point number is converted into the input analog signal, the analog computing module may perform analog computing based on the input analog signal to obtain a computation result analog signal. The analog computing module may use an RRAM array. For the RRAM array, a multiplication operation may be completed according to Ohm's law, and an addition operation may be completed according to Kirchhoff's law, so that multiplication and addition operations can be quickly completed. In comparison with completing floating-point number computation in digital domain, computational efficiency can be improved and power consumption of the computing apparatus can be reduced. In addition, floating-point computation is completed based on analog computing. This enhances applicability of analog computing.

The computing apparatus provided in embodiments of this application may be used in a training or inference process of a neural network model in the artificial intelligence field. In a training or inference process of a neural network model, convolution computing of a large amount of data usually needs to be performed, and the convolution computing includes a multiplication operation and an addition operation. The RRAM array may receive, by using a multi-bit feature of a device, a plurality of input analog signals input by a plurality of digital-to-analog conversion modules in the computing apparatus, and simultaneously complete analog computing of a plurality of input floating-point numbers. Therefore, computational efficiency can be greatly improved. After the RRAM array performs analog computing, an output computation result analog signal is an output current analog signal. The analog-to-digital conversion module may integrate the output current analog signal through the active integrator unit, convert the output current analog signal into a voltage signal, detect a voltage output by the active integrator unit, adjust, through the dynamic adjustment unit in a timely manner, a conversion ratio parameter of the active integrator unit for the output current analog signal, determine an exponent part of a result floating-point number based on a finally obtained conversion ratio parameter, and determine a mantissa part of the result floating-point number based on the voltage output by the active integrator unit when the conversion ratio parameter is determined, so that different result floating-point numbers may be obtained based on different magnitudes of the output current analog signal, and floating-point number computation in analog domain is completed. Therefore, dynamic ranges of result floating-point numbers read based on different computation result analog signals can be self-adaptively adjusted, and reading of result floating-point numbers with different exponents can be supported.

Because an integrator capacitor of the active integrator unit continuously performs integration in sampling time (namely, specified period of time), the voltage output by the active integrator unit is strongly related to the specified period of time. Therefore, a length of the specified period of time may be preset based on experience or results of experimental tests.

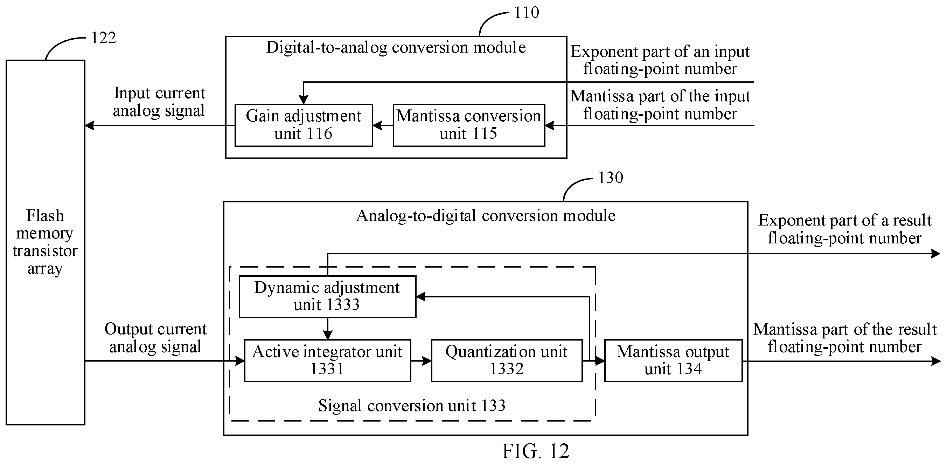

In a second optional embodiment, as shown in FIG. 12, the analog computing module may use a flash memory transistor array 122. An input analog signal of the flash memory transistor array 122 may be a current analog signal. In this embodiment, the digital-to-analog conversion module 110 may be configured to convert an input floating-point number into an input current analog signal.

As shown in FIG. 12, the digital-to-analog conversion module 110 may include a mantissa conversion unit 115 and a gain adjustment unit 116. The mantissa conversion unit 115 may be configured to convert a mantissa part of the input floating-point number into an initial current analog signal. The gain adjustment unit 116 may be configured to perform gain adjustment on the initial current analog signal based on an exponent part of the input floating-point number, to obtain the input current analog signal.

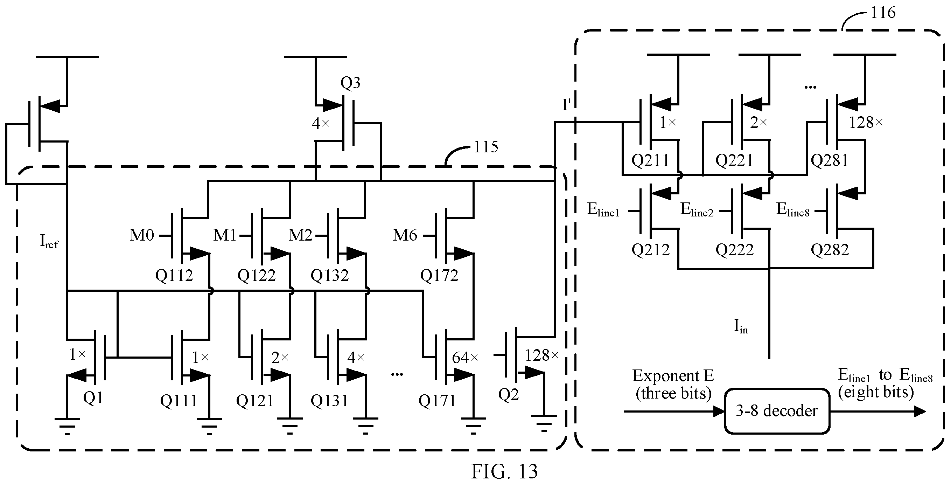

In some embodiments, a circuit structure of the digital-to-analog conversion module 110 may be shown in FIG. 13. The mantissa conversion unit 115 may be of a current mirror structure. The current mirror structure may include a reference transistor Q1 and a plurality of output transistor branches. The plurality of output transistor branches are configured to: receive the mantissa part of the input floating-point number, and output the initial current analog signal. In some embodiments, a quantity of output transistor branches included in the mantissa conversion unit 115 is the same as a length of the mantissa part of the input floating-point number. For example, assuming that the mantissa part of the input floating-point number includes N bits, where N is an integer greater than 1, the current mirror structure may include N output transistor branches, and each of the N output transistor branches is configured to receive one of the N bits. The mantissa conversion unit 115 shown in FIG. 13 includes seven output transistor branches. The mantissa part of the input floating-point number that may be received is seven bits, and the seven output transistor branches are respectively configured to receive values of $M_0$ to $M_6$ in the mantissa part. Each output transistor branch may include a first output transistor and a second output transistor, and the output transistor branches have same structures and same connection manners. A first output transistor branch is used as an example for description. The first output transistor branch includes a first output transistor Q111 and a second output transistor Q112. A gate electrode of the first output transistor Q111 is connected to a gate electrode of the reference transistor Q1, and both the gate electrode and a drain electrode of the reference transistor Q1 are configured to receive a reference current $I_{ref}$. A source electrode of the first output transistor Q111 and a source electrode of the reference transistor Q1 are both grounded, a drain electrode of the first output transistor Q111 is connected to a source electrode of the second output transistor Q112, a drain electrode of the second output transistor Q112 may be connected to a power supply through another transistor Q3, and a gate electrode of the second output transistor Q112 is configured to receive the value of the bit $M_0$ in the mantissa part of the input floating-point number. Current amplification coefficients of first output transistors in the plurality of output transistor branches are in a multiple relationship. As shown in FIG. 13, a current amplification coefficient of the first output transistor Q111 of the first output transistor branch is $1\times$(time), a current amplification coefficient of a first output transistor Q121 of a second output transistor branch is $2\times$, a current amplification coefficient of a first output transistor Q131 of a third output transistor branch is $4\times$, and so on, and a current amplification coefficient of a first output transistor Q171 of a seventh output transistor branch is $64\times$. Drain electrodes of second output transistors in the plurality of output transistor branches are output ends, and are configured to output the initial current analog signal. The second output transistors in the plurality of output transistor branches may be understood as switch devices, and are configured to control, based on values of bits corresponding to the mantissa part of the received input floating-point number, connection/disconnection of corresponding output transistor branches, to control a magnitude of the output initial current analog signal. Output ends of the plurality of output transistor branches may be grounded through a transistor Q2 whose current amplification coefficient is $128\times$.

The mantissa conversion unit 115 controls the magnitude of the output initial current analog signal through a switch device on each output transistor branch. For example, when the values of the seven bits of the mantissa part of the received input floating-point number are all 0, that is, $M_0$ to $M_6$ are all 0, each output transistor branch is in a disconnected state, and the initial current analog signal output by the mantissa conversion unit 115 is $128 \ast I_{ref}$. When the values of the seven bits of the mantissa part of the received input floating-point number are all 1, that is, $M_0$ to $M_6$ are all 1, each output transistor branch is in a connected state, and the initial current analog signal output by the mantissa conversion unit 115 is $255 \ast I_{ref}$, in other words, the output ends of the plurality of output transistor branches may output a current with a magnitude from $128 \ast I_{ref}$ to $255 \ast I_{ref}$. The mantissa conversion unit 115 outputs the initial current analog signal I' to the gain adjustment unit 116.

The gain adjustment unit 116 may include a plurality of switch-controlled transistor branches. The plurality of switch-controlled transistor branches are configured to provide a plurality of gain adjustment coefficients, and the plurality of switch-controlled transistor branches are configured to: determine a target gain adjustment coefficient based on the exponent part of the input floating-point number, and perform gain adjustment on the initial current analog signal by using the target gain adjustment coefficient, to obtain the input current analog signal.

In an optional embodiment, as shown in FIG. 13, the gain adjustment unit 116 may include eight switch-controlled transistor branches. Assuming that the exponent part E of the input floating-point number includes 3-bit data, the 3-bit data in the exponent part E of the input floating-point number may be first converted into 8-bit data, which are respectively $E_{line1}$ to $E_{line8}$, through a 3-8 decoder. Each bit of the 8-bit data is correspondingly input to a respective one of the eight switch-controlled transistor branches. The data obtained through the conversion by the 3-8 decoder may also be referred to as a one-hot code. For example, when the exponent part E of the input floating-point number is 000, the data obtained through the conversion by the 3-8 decoder is $E_{line}$=00000001. When the exponent part E of the input floating-point number is 100, the data obtained through the conversion by the 3-8 decoder is $E_{line}$=00010000. Each switch-controlled transistor branch may include a first regulating transistor and a second regulating transistor, and the switch-controlled transistor branches have same structures and same connection manners. A first switch-controlled transistor branch is used as an example for description. The first switch-controlled transistor branch includes a first regulating transistor Q211 and a second regulating transistor Q212. A gate electrode of the first regulating transistor Q211 is connected to an output end of the mantissa conversion unit 115, and is configured to receive the initial current analog signal I' output by the mantissa conversion unit 115. A source electrode of the first regulating transistor Q211 is connected to a power supply, a drain electrode of the first regulating transistor Q211 is connected to a source electrode of the second regulating transistor Q212, and a drain electrode of the second regulating transistor Q112 is used as an output end of the gain adjustment unit 116, and a gate electrode of the second regulating transistor Q212 is configured to correspondingly receive the bit $E_{line1}$ obtained by decoding the exponent part of the input floating-point number. Current amplification coefficients of first regulating transistors in the plurality of switch-controlled transistor branches are in a multiple relationship. As shown in FIG. 13, a current amplification coefficient of the first regulating transistor Q211 in the first switch-controlled transistor branch is 1×, a current amplification coefficient of a first regulating transistor Q221 in a second switch-controlled transistor branch is 2×, a current amplification coefficient of a first regulating transistor in a third switch-controlled transistor branch is 4×, and so on, and a current amplification coefficient of a first regulating transistor Q281 in an eighth switch-controlled transistor branch is 128×. The current amplification coefficient of the first regulating transistor in each switch-controlled transistor branch may be understood as a gain adjustment coefficient provided by the corresponding switch-controlled transistor branch. Because current amplification coefficients of first regulating transistors in different switch-controlled transistor branches are different, it may be understood that different switch-controlled transistor branches provide different gain adjustment coefficients, and the plurality of switch-controlled transistor branches may be configured to provide a plurality of gain adjustment coefficients. Second regulating transistors in the plurality of switch-controlled transistor branches may be understood as switch devices, and are configured to control, based on values of bits corresponding to the received exponent part of the input floating-point number, connection/disconnection of corresponding switch-controlled transistor branches. Any current of 1, 2, 4, ..., and 128 times currents may be conducted through switch control, to control a gain adjustment coefficient for the initial current analog signal I', to obtain the input current analog signal $I_{in}$. Drain electrodes of the second regulating transistors in the plurality of switch-controlled transistor branches are output ends, and are configured to output the input current analog signal $I_{in}$, in other words, are configured to input the input current analog signal $I_{in}$ into the flash memory transistor array 122 for operation.

In another optional embodiment, assuming that the exponent part of the input floating-point number includes 3-bit data, the gain adjustment unit 116 may also include three switch-controlled transistor branches, and each switch-controlled transistor branch is configured to receive a value of one bit of the exponent part of the input floating-point number.

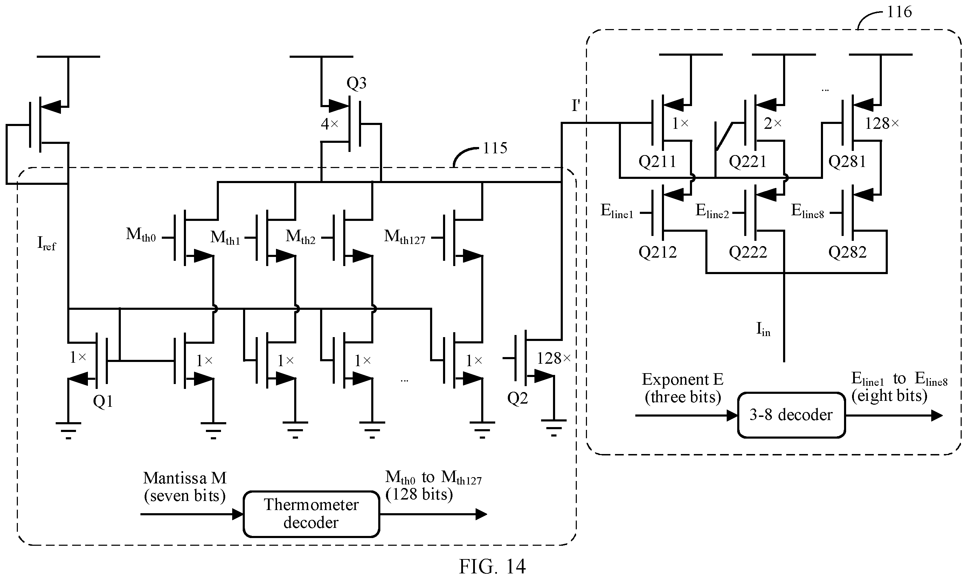

In some other embodiments, a circuit structure of the digital-to-analog conversion module 110 may be shown in FIG. 14. A circuit structure of the gain adjustment unit 116 of the digital-to-analog conversion module shown in FIG. 14 is the same as a circuit structure of the gain adjustment unit shown in FIG. 13. A difference between the digital-to-analog conversion module shown in FIG. 14 and the digital-to-analog conversion module shown in FIG. 13 lies in that quantities of output transistor branches included in current mirror structures of the mantissa conversion units 115 are different. In the mantissa conversion unit 115 shown in FIG. 14, the quantity of output transistor branches is greater than a length of the mantissa part of the input floating-point number. Assuming that the mantissa part of the input floating-point number includes N bits, the mantissa conversion unit 115 includes M output transistor branches, $M=2^N$, and current amplification coefficients of first output transistors in all of the output transistor branches may be the same. The M output transistor branches are connected to a thermometer decoder. The N bits of the mantissa part of the input floating-point number are input to the thermometer decoder, and are converted, through the thermometer decoder, into M bits for output. Each of the M bits is correspondingly input to one of the M output transistor branches. For example, the mantissa part of the input floating-point number includes 7-bit data. The 7-bit data is input to the thermometer decoder, and after being converted by the thermometer decoder, $2^7$=128-bit data may be obtained, and the 128-bit data is output through 128 output branches respectively. The mantissa conversion unit 115 may include 128 output transistor branches, where current amplification coefficients of first output transistors in all the output transistor branches are 1×, gate electrodes $M_{th0}$ to $M_{th127}$ of second output transistors in all the output transistor branches are separately connected to one output branch of the thermometer decoder, and the second output transistors in the plurality of output transistor branches are configured to receive the 128-bit data that is obtained by converting the mantissa part of the input floating-point number by the thermometer decoder, drain electrodes of the second output transistors in the plurality of output transistor branches are used as output ends, and the output ends of the plurality of output transistor branches may be grounded through a transistor Q2 whose current amplification coefficient is 128×. The second output transistors in the plurality of output transistor branches may be understood as switch devices, and are configured to control, based on values of corresponding bits of the received 128-bit data, connection/disconnection of corresponding output transistor branches, to control a magnitude of the output initial current analog signal I'. Same as the mantissa conversion unit shown in FIG. 13, the output ends of the plurality of output transistor branches shown in FIG. 14 may also output a current of any magnitude between 128*$I_{ref}$ and 255*$I_{ref}$. For example, it is assumed that the mantissa part of the input floating-point number includes 7-bit data. When the mantissa part M of the input floating-point number is 0110000, a value represented by the mantissa part is 48, 128-bit data converted by the thermometer decoder includes 48 bits being 1, and values of remaining 80 bits are 0. In this case, a magnitude of the initial current analog signal I' output by the output ends of the plurality of output transistor branches of the mantissa conversion unit is (128+48)*$I_{ref}$. The output ends of the plurality of output transistor branches of the mantissa conversion unit transmit the initial current analog signal I' to the gain adjustment unit 116.

The gain adjustment unit 116 in FIG. 14 may also include a plurality of switch-controlled transistor branches. The plurality of switch-controlled transistor branches are configured to provide a plurality of gain adjustment coefficients, and the plurality of switch-controlled transistor branches are configured to: determine a target gain adjustment coefficient based on the exponent part of the input floating-point number, and perform gain adjustment on the initial current analog signal by using the target gain adjustment coefficient, to obtain the input current analog signal $I_{in}$.

Only different circuit parts in FIG. 14 and FIG. 13 are described above. For a same circuit part in FIG. 14 and FIG. 13, refer to the circuit structure described in FIG. 13 for implementation. Details are not described herein again.

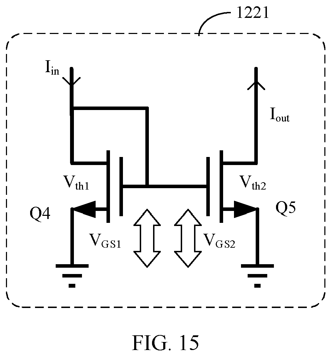

After converting the input floating-point number into the input current analog signal $I_{in}$, the digital-to-analog conversion module 110 transmits the input current analog signal $I_{in}$ to the flash memory transistor array 122, and the flash memory transistor array 122 performs an operation based on the input current analog signal, and outputs a computation result analog signal. A circuit structure of the flash memory transistor array 122 may include one or more current mirror units 1221. A structure of each current mirror unit 1221 is shown in FIG. 15, and may include a computing reference transistor Q4 and a computing output transistor Q5. The computing output transistor Q5 has a floating gate (floating gate). The floating gate refers to an isolated charge storage area formed by adding a layer of non-conducting material between two metal layers in the computing output transistor Q5. The charge storage area may be referred to as the floating gate. A source electrode of the computing reference transistor Q4 is configured to receive the input current analog signal $I_{in}$ from the digital-to-analog conversion module 110, and parameter data used to perform an operation with the input floating-point number may be applied to the floating gate of the current mirror unit 1221 in a form of a control voltage. Under an action of the control voltage, a relationship between the input current analog signal $I_{in}$ and an output current analog signal $I_{out}$ of the current mirror unit 1221 may be expressed as follows:

$$I_{in} = I_0 \cdot exp\{q\frac{V_{GS1} - V_{th1}}{nk_BT}\}$$

$$I_{out} = I_0 \cdot exp\{q\frac{V_{GS2} - V_{th2}}{nk_BT}\}$$

In the foregoing formula, $I_0$ is a reference current value related to a size of the transistor, q, n, and $k_B$ are constants, T is a temperature coefficient, $V_{th}$ is a threshold voltage of each transistor, and $V_{GS}$ is a gate-source voltage of the transistor. In the connection relationship shown in FIG. 15, $V_{GS1}$=$V_{GS2}$, working conditions such as sizes and temperatures of input and output transistors are the same, and threshold voltages are different. Therefore, a relationship between an output current and an input current can be simplified as follows:

$$w = \frac{I_{Out}}{I_{In}} = exp\left\{q\frac{V_{th1} - V_{th2}}{nk_BT}\right\}$$

The output current analog signal $I_{out}$ may be considered as a product of the input current analog signal $I_{in}$ and the parameter data.

In some embodiments, if the flash memory transistor array 122 includes one current mirror unit, an output current analog signal $I_{out}$ of the current mirror unit may be output to the analog-to-digital conversion module as a computation result analog signal $I_{MAC}$ of the analog computing module. In some other embodiments, if the flash memory transistor array 122 includes a plurality of current mirror units, each current mirror unit may receive an input current analog signal $I_{in}$ corresponding to one input floating-point number. The flash memory transistor array 122 may be configured to simultaneously perform computing on a plurality of input floating-point numbers and reference data. A computation result analog signal $I_{MAC}$ of the analog computing module may be a sum of output current analog signals $I_{out}$ output by all the current mirror units.

Because the computation result analog signal output by the flash memory transistor array 122 is also a current analog signal, a circuit structure of the analog-to-digital conversion module shown in FIG. 12 may be implemented with reference to a circuit structure of the analog-to-digital conversion module 130 shown in the first optional embodiment. Details are not described herein again.

The foregoing embodiment provides a method for converting an input floating-point number into an input current analog signal, and performing analog computing through a flash memory transistor array. This can improve computational efficiency in comparison with completing floating-point number computation in digital domain.

The analog-to-digital conversion module 130 shown in the first optional embodiment is in a current integration form, and a value of the finally output result floating-point number is strongly correlated with the specified period of time Ts. In another embodiment, an output analog signal may be first waited to be stable in the self-adaptation phase, and then the quantization phase is entered after the output analog signal is stable. The exponent part and the mantissa part of the result floating-point number are determined in the quantization phase.

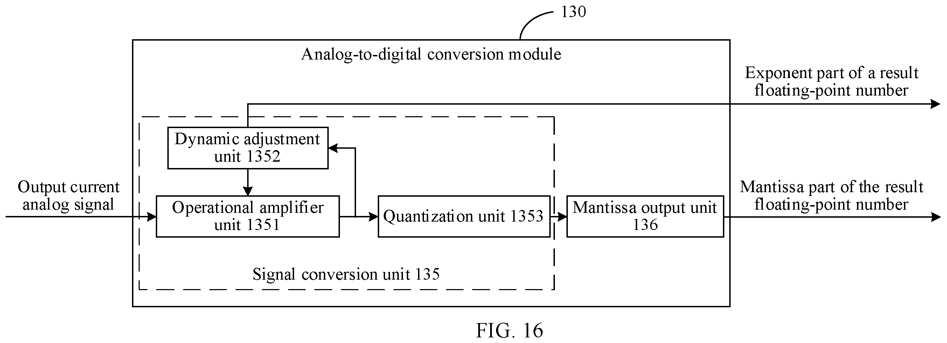

In a third optional embodiment, another specific implementation is provided for the analog-to-digital conversion module 130 in the first optional embodiment and the second optional embodiment. As shown in FIG. 16, in this embodiment, the analog-to-digital conversion module 130 may include a signal conversion unit 135 and a mantissa output unit 136. The signal conversion unit 135 may be configured to: determine, based on a received computation result analog signal, a voltage value corresponding to a mantissa part of a result floating-point number, and output an exponent part of the result floating-point number. The mantissa output unit 136 may be configured to: output the mantissa part of the result floating-point number based on the voltage value corresponding to the mantissa part of the result floating-point number.

The signal conversion unit 135 may include an operational amplifier unit 1351, a dynamic adjustment unit 1352, and a quantization unit 1353. The operational amplifier unit 1351 may be used as another implementation of the first conversion unit, the dynamic adjustment unit 1352 may be used as another implementation of the first dynamic adjustment unit, and the quantization unit 1353 may be used as a second quantization unit. The operational amplifier unit may be configured to output a second voltage based on an output current analog signal. The first dynamic adjustment unit may be configured to adjust, based on variation of the second voltage, a conversion ratio parameter of the operational amplifier unit for the output current analog signal until a variation amplitude of the second voltage is less than or equal to a first specified amplitude threshold. The second quantization unit may be configured to determine, based on the second voltage whose variation amplitude is less than or equal to the first specified amplitude threshold, the voltage value corresponding to the mantissa part of the result floating-point number. The first dynamic adjustment unit may be further configured to output the exponent part of the result floating-point number based on the conversion ratio parameter of the operational amplifier unit for the output current analog signal when the variation amplitude of the second voltage is less than or equal to the first specified amplitude threshold.

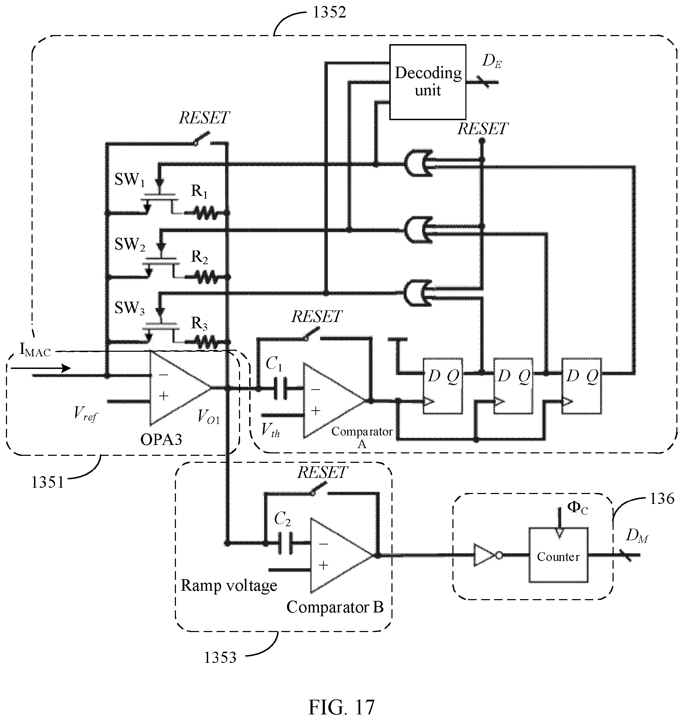

In some embodiments, a circuit structure of the analog-to-digital conversion module 130 may be shown in FIG. 17. The operational amplifier unit 1351 may include an operational amplifier OPA3. The operational amplifier OPA3 may be configured to: receive an output current analog signal $I_{MAC}$, convert the output current analog signal into a voltage signal, and output a second voltage $V_{O1}$. For example, a negative input end of the operational amplifier OPA3 is connected to an output end of the analog computing module, and is configured to receive a computation result analog signal $I_{MAC}$ output by the analog computing module. A positive input end of the operational amplifier OPA3 may be connected to a reference voltage generation circuit, and the reference voltage generation circuit provides a reference voltage $V_{ref}$ for the operational amplifier OPA3.

The dynamic adjustment unit 1352 may include a comparator A, a plurality of flip-flops, and a plurality of switched resistor branches, where the flip-flops one-to-one correspond to the switched resistor branches. A first input end of the comparator A is connected to an output end of the operational amplifier OPA3, and is configured to receive the second voltage output by the operational amplifier OPA3, and a second input end of the comparator A is configured to receive a constant voltage $V_{th}$. The comparator A is configured to output a control signal based on variation of the second voltage. Each of the plurality of switched resistor branches may include a feedback resistor and a switch device that are connected in series, and resistance values of feedback resistors in the plurality of switched resistor branches are in a multiple relationship. A first end of each switched resistor branch is connected to the input end of the operational amplifier OPA3, and a second end of each switched resistor branch is connected to the output end of the operational amplifier OPA3. Input ends of the plurality of flip-flops are all connected to an output end of the comparator A. An output end of each of the plurality of flip-flops is connected to a corresponding switched resistor branch among the plurality of switched resistor branches, and is configured to control, under action of the control signal output by the comparator A, the corresponding switched resistor branch to be connected or disconnected, to adjust a conversion ratio parameter of the operational amplifier unit 1351 for the output current analog signal. FIG. 17 shows three flip-flops and three switched resistor branches. A first switched resistor branch includes a feedback resistor $R_1$ and a switch device $SW_1$, a second switched resistor branch includes a feedback resistor $R_2$ and a switch device $SW_2$, and a third switched resistor branch includes a feedback resistor $R_3$ and a switch device $SW_3$. A resistance value of the feedback resistor $R_1$ may be 4R, a resistance value of the feedback resistor $R_2$ may be 2R, and a resistance value of the feedback resistor $R_3$ may be R. The switch device may use a transistor, the output end of each flip-flop is connected to a gate electrode of a transistor of a corresponding switched resistor branch through an OR gate, and a drain electrode of the transistor is connected to the resistor.

The dynamic adjustment unit 1352 may further include a decoding unit. The decoding unit is connected to output ends of OR gates corresponding to the plurality of flip-flops. The decoding unit may use a circuit chip that converts a thermometer code into a binary code, and is configured to: read an adjusted conversion ratio parameter, and output the exponent part of the result floating-point number based on the conversion ratio parameter.

The quantization unit 1353 may include a comparator B. A first input end of the comparator B is connected to the output end of the operational amplifier OPA3, and is configured to receive the second voltage output by the operational amplifier OPA3. A second input end of the comparator B is configured to be connected to a ramp signal generation circuit. The ramp signal generation circuit is configured to: after the variation amplitude of the second voltage is less than or equal to the first specified amplitude threshold, provide a ramp voltage that changes at a specified rate for the comparator B. An output end of the comparator B may output a control signal to the mantissa output unit 136 based on variation of the ramp voltage.

The mantissa output unit 136 may include a counter, and the counter is configured to output the mantissa part of the result floating-point number based on the voltage value corresponding to the mantissa part of the result floating-point number. The counter may be connected to an output end of the quantization unit through a reverser. The counter may use a Mbit counter.

A process in which the analog-to-digital conversion module 130 converts the computation result analog signal into the result floating-point number may include a self-adaptation phase and a quantization phase. In the self-adaptation phase, working principles of the operational amplifier unit 1351 and the dynamic adjustment unit 1352 are as follows: The output current analog signal $I_{MAC}$ is input by the analog computing module into the negative input end of the operational amplifier OPA3. Due to a "virtual short" effect, a level of the negative input end of the operational amplifier OPA3 is clamped. During initial working, under an action of the flip-flop in the dynamic adjustment unit 1352, the switch device $SW_1$ in the first switched resistor branch is turned on, and the switch device $SW_2$ in the second switched resistor branch and the switch device $SW_3$ in the third switched resistor branch are turned off. In this case, the first switched resistor branch is connected, the resistance value of the feedback resistor in the connected circuit is 4R, and the conversion ratio parameter of the operational amplifier unit for the output current analog signal is at a first level. Due to characteristics of "virtual short and virtual break" of the operational amplifier, the voltage $V_{O1}$ (namely, the second voltage) is determined in the following manner:

$$\frac{V_{O1}-V_{ref}}{4R}=I_{MAC}$$

$$V_{O1}=I_{MAC}*4R+V_{ref}$$

In the foregoing process, a value of $V_{O1}$ is irrelevant to time. Therefore, in an actual operation process, the value of $V_{O1}$ quickly reaches a stable state. For example, $V_{O1}$ may reach the stable state in 5 ns. The stable $V_{O1}$ is compared with the constant voltage $V_{th}$ through the comparator A. When $V_{O1}>V_{th}$, the comparator A outputs a high-level control signal, and the high-level control signal turns off the switch device $SW_1$ in the first switched resistor branch through the flip-flop, and turns on the switch device $SW_2$ in the second switched resistor branch, and the resistance value of the feedback resistor of the connected circuit changes from 4R to 2R. Therefore, the conversion ratio parameter of the operational amplifier unit for the output current analog signal is adjusted from the first level to a second level. In this case, $V_{O1}$ is re-updated to:

$$V_{O1}=I_{MAC}*2R+V_{ref}$$

By analogy, when the updated $V_{O1}$ is still greater than $V_{th}$, the resistance value of the feedback resistor of the connected circuit may be further reduced, and the resistance value of the feedback resistor of the connected circuit is changed from 2R to R. When a dynamic range of the computation result analog signal that needs to be processed is large, the dynamic adjustment unit 1352 may include more switched resistor branches, and corresponding feedback resistors may be changed to [32R, 16R, 8R, 4R, 2R, R] or the like.

When the value of $V_{O1}$ tends to be stable and is less than the constant voltage $V_{th}$, in other words, when the variation amplitude of the second voltage is less than or equal to the first specified amplitude threshold, it may be considered that the self-adaptation phase is completed, where the first specified amplitude threshold is a value less than the constant voltage $V_{th}$.

In the foregoing process, $V_{O1}=V_{th}$ is a critical point of switching the conversion ratio parameter, corresponds to

$$I_{MAC}=\frac{V_{th}-V_{ref}}{4R}$$ before the switching, and corresponds to $$V_{O1}=I_{MAC}*2R+V_{ref}=\frac{V_{th}-V_{ref}}{4R}*2R+V_{ref}=\frac{V_{th}+V_{ref}}{2}$$

after the switching. It can be learned that, when $I_{MAC}$ changes, $V_{O1}$ in the stable state finally satisfies

$$\frac{V_{th}+V_{ref}}{2}\leq V_{O1}\leq V_{th}$$ .

After the self-adaptation phase is completed, the quantization unit 1353 may quantize $V_{O1}$ output by the operational amplifier OPA3, and a measurement range of the quantization unit is $\left[\frac{V_{th}+V_{ref}}{2}, V_{th}\right]$ . output by the operational amplifier OPA3 tends to be stable, the second input end of the comparator B receives the ramp voltage, and the ramp voltage gradually increases from 0 at the specified rate until the ramp voltage increases to the constant voltage $V_{th}$. When the ramp voltage gradually increases from 0, the counter in the mantissa output unit 136 starts to count at a specified periodicity, and a count value of the counter is incremented by 1 each time the specified periodicity elapses, until the ramp voltage input at the second input end of the comparator B increases to the voltage value $V_{O1}$ received by the first input end of the comparator B, the comparator B outputs a high-level control signal, to control the counter to stop counting, and the mantissa output unit 136 outputs a computed value of the counter as the mantissa part $D_M$ of the result floating-point number. The decoding unit in the dynamic adjustment unit 1352 uses a combination of values output by the OR gates corresponding to the plurality of flip-flops as a thermometer code, where the thermometer code represents a current conversion ratio parameter. The decoding unit converts the thermometer code into a binary code, to obtain the exponent part $D_E$ of the result floating-point number.

In the circuit structure shown in FIG. 17, the dynamic adjustment unit 1352 and the quantization unit 1353 each use one comparator, the dynamic adjustment unit 1352 uses the comparator A, and the quantization unit 1353 uses the comparator B. In another embodiment, also refer to the manner shown in FIG. 9, the dynamic adjustment unit 1352 and the quantization unit 1353 share one comparator. In the self-adaptation phase, a second input end of the comparator may receive a constant voltage $V_{th}$. In the quantization phase, the second input end of the comparator may receive a ramp voltage that changes at a specified rate.

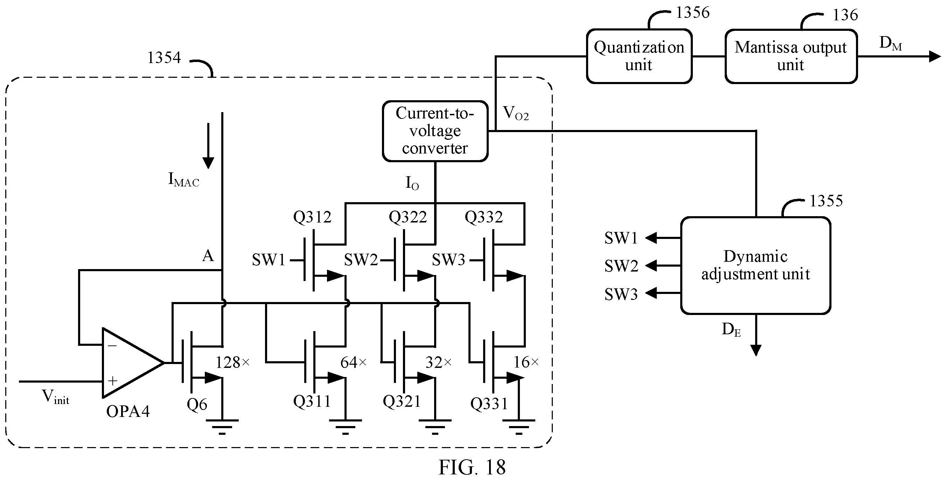

In some other embodiments, a circuit structure of the analog-to-digital conversion module 130 may be shown in FIG. 18. The analog-to-digital conversion module 130 may include an operational amplifier unit 1354, a dynamic adjustment unit 1355, and a quantization unit 1356. The operational amplifier unit 1354 may include an operational amplifier negative feedback circuit, a plurality of transistor branches, and a current-to-voltage converter. The operational amplifier negative feedback circuit may include an operational amplifier OPA4, and the operational amplifier OPA4 may be configured to receive an output current analog signal $I_{MAC}$. For example, a negative input end of the operational amplifier OPA4 is connected to an output end of the analog computing module, and is configured to receive the output current analog signal $I_{MAC}$ output by the analog computing module. A positive input end of the operational amplifier OPA4 may be connected to a reference voltage generation circuit, and the reference voltage generation circuit provides a reference voltage $V_{init}$ for the operational amplifier OPA4. An output end of the operational amplifier OPA4 is connected to a reference transistor Q6, a gate electrode of the reference transistor Q6 is connected to the output end of the operational amplifier OPA4, a source electrode of the reference transistor Q6 is grounded, and a drain electrode of the reference transistor Q6 is configured to receive the output current analog signal $I_{MAC}$. The plurality of transistor branches are connected between an output end of the operational amplifier negative feedback circuit and an input end of the current-to-voltage converter, and are configured to: adjust, based on a control signal of the dynamic adjustment unit 1355, a conversion ratio parameter for the output current analog signal $I_{MAC}$, and output $I_O$ with different magnitudes corresponding to different levels. The current-to-voltage converter is configured to: convert the current signal $I_O$ output by the plurality of transistor branches into a voltage signal, and output a voltage $V_{O2}$.

For example, each of the plurality of transistor branches includes a first transistor and a second transistor, and current amplification coefficients of first transistors in the plurality of transistor branches are in a multiple relationship. The operational amplifier unit 1354 shown in FIG. 18 includes three transistor branches. A current amplification coefficient of a first transistor Q311 in a first transistor branch is 64×, a current amplification coefficient of a first transistor Q321 in a second transistor branch is 32×, and a current amplification coefficient of a first transistor Q331 in a third transistor branch is 16×. In another embodiment, there may be more transistor branches. When there are more transistor branches, by analogy, current amplification coefficients of first transistors in the transistor branches decrease by multiples. A gate electrode of the first transistor in each of the plurality of transistor branches is connected to the gate electrode of the reference transistor Q6 and the output end of the operational amplifier OPA4, and a gate electrode of the second transistor is connected to an output end of a corresponding flip-flop in the dynamic adjustment unit 1355. The first transistor branch is used as an example, a gate electrode of the first transistor Q311 in the first transistor branch is connected to the gate electrode of the reference transistor Q6 and the output end of the operational amplifier OPA4, a source electrode of the first transistor Q311 is grounded, and a drain electrode of the first transistor Q311 is connected to a source electrode of a second transistor Q312. Drain electrodes of second transistors in the plurality of transistor branches are output ends of the plurality of transistor branches, and are configured to output the current signal $I_O$. The current-to-voltage converter is connected to the output ends of the plurality of transistor branches, and is configured to convert the current signal $I_O$ into a voltage signal, and output a voltage $V_{O2}$.

The dynamic adjustment unit 1355 may include a comparator A and a plurality of flip-flops, and the flip-flops one-to-one correspond to the transistor branches in the operational amplifier unit. A first input end of the comparator A is connected to an output end of the current-to-voltage converter, and is configured to receive the voltage $V_{O2}$ output by the current-to-voltage converter. A second input end of the comparator A is configured to receive a constant voltage $V_{th}$. The comparator A is configured to output a control signal based on variation of the voltage $V_{O2}$. Input ends of the plurality of flip-flops are all connected to an output end of the comparator A. An output end of each of the plurality of flip-flops is connected to a corresponding transistor branch in the plurality of transistor branches, and is configured to control, under the action of the control signal output by the comparator A, the corresponding transistor branch to be connected or disconnected, to adjust a conversion ratio parameter of the operational amplifier unit 1354 for the output current analog signal. For example, the output end of each flip-flop is connected to a gate electrode of a second transistor in the corresponding transistor branch through an OR gate. The second transistor may be understood as a switch device, and is configured to be turned on or off under control of the flip-flop, so that the corresponding transistor branch is connected or disconnected, to adjust the conversion ratio parameter of the operational amplifier unit 1354 for the output current analog signal.

The dynamic adjustment unit 1355 may further include a decoding unit. The decoding unit is connected to output ends of OR gates corresponding to the plurality of flip-flops. The decoding unit may use a circuit chip that converts a thermometer code into a binary code, and is configured to: read an adjusted conversion ratio parameter, and output the exponent part of the result floating-point number based on the conversion ratio parameter.

FIG. 18 does not show a specific circuit structure of the dynamic adjustment unit 1355. In comparison with the dynamic adjustment unit 1352 shown in FIG. 17, only a plurality of switching resistor branches are reduced for the dynamic adjustment unit 1355. For a connection relationship between the comparator A and the flip-flop in the dynamic adjustment unit 1355, refer to the dynamic adjustment unit 1352 for implementation.

The quantization unit 1356 may include a comparator B. A first input end of the comparator B is connected to the output end of the current-to-voltage converter, and is configured to receive the voltage $V_{O2}$ output by the current-to-voltage converter. A second input end of the comparator B is configured to be connected to a ramp signal generation circuit. The ramp signal generation circuit is configured to: after a variation amplitude of the voltage $V_{O2}$ is less than or equal to a first specified amplitude threshold, provide a ramp voltage that changes at a specified rate for the comparator B. An output end of the comparator B may output a control signal to the mantissa output unit 136 based on variation of the ramp voltage.

The mantissa output unit 136 may include a counter, and the counter is configured to output the mantissa part of the result floating-point number based on the voltage value corresponding to the mantissa part of the result floating-point number. The counter may be connected to an output end of the quantization unit through a reverser. The counter may use a Mbit counter.

For a specific circuit structure of the quantization unit 1356, refer to the quantization unit 1356 in FIG. 17 for implementation. For the mantissa output unit 136, refer to the mantissa output unit 136 in FIG. 17 for implementation. Details are not repeatedly shown in FIG. 18.

A process in which the analog-to-digital conversion module 130 converts the computation result analog signal into the result floating-point number may include a self-adaptation phase and a quantization phase. In the self-adaptation phase, working principles of the operational amplifier unit 1334 and the dynamic adjustment unit 1355 are as follows: The operational amplifier unit 1334 uses an operational amplifier and a multiple current mirror structure, and the multiple current mirror structure may include a reference transistor and a plurality of transistor branches. The operational amplifier clamps, through the negative feedback circuit, a voltage at a point A in the circuit to $V_{init}$, to ensure correctness of an operation result. However, a voltage at the output end of the operational amplifier OPA4 changes with the output current analog signal $I_{MAC}$. Transistors with [64×, 32×, 16×...] generate currents such as $\dfrac{I_{MAC}}{2}$, $\dfrac{I_{MAC}}{4}$, and $\dfrac{I_{MAC}}{8}$ in a current mirror manner. During initial working, under an action of the flip-flop in the dynamic adjustment unit 1355, the second transistor Q312 in the first transistor branch is turned on, and a second transistor Q322 in the second transistor branch and a second transistor Q332 in the third transistor branch are turned off. In this case, the first transistor branch is connected, so that the output ends of the plurality of transistor branches output the current $I_O = \frac{I_{MAC}}{2}$. conversion multiple of the current-to-voltage converter is fixed and linear. Assuming that the conversion coefficient is k, the current-to-voltage converter outputs the voltage $V_{O2} = V_{init} + I_O * k$. Because of current $I_O = \frac{I_{MAC}}{2}$ during the initial working, $V_{O2} = V_{init} + \frac{I_{MAC}}{2} * k$.

When $V_{O2} > V_{th}$, the comparator A outputs a high-level control signal, to adjust a level of the conversion ratio parameter. The high-level control signal turns off the second transistor Q312 in the first transistor branch through the flip-flop, and turns on the second transistor Q322 in the second transistor branch, to adjust the conversion ratio parameter of the operational amplifier unit for the output current analog signal from a first level to a second level. In this case, the output ends of the plurality of transistor branches output the current $I_O = \frac{I_{MAC}}{4}$, and the voltage output by the current-to-voltage converter is switched to $V_{O2} = V_{init} + \frac{I_{MAC}}{2} * k$. By analogy, when a value of $V_{O2}$ tends to be stable and is less than the constant voltage $V_{th}$, in other words, when a variation amplitude of the voltage $V_{O2}$ is less than or equal to a specified amplitude threshold, it may be considered that the self-adaptation phase is completed. Finally, $V_{O2}$ in a stable state satisfies $\frac{V_{th} + V_{init}}{2} \leq V_{O2} \leq V_{th}$, in other words, the specified amplitude threshold maybe in a range of $[\frac{V_{th} + V_{init}}{2}$,

Because the voltage $V_{O2}$ output by the current-to-voltage converter completely reflects a magnitude of the current $I_O$ output by the plurality of transistor branches, adjusting, based on variation of the voltage $V_{O2}$, the conversion ratio parameter of the operational amplifier unit for the output current analog signal may also be understood as adjusting, based on variation of the current $I_O$, the conversion ratio parameter of the operational amplifier unit for the output current analog signal.

After the self-adaptation phase is completed, the quantization unit 1356 may quantize $V_{O2}$ output by the operational amplifier unit 1354, and a measurement range of the quantization unit 1356 is $[\frac{V_{th} + V_{init}}{2}, V_{th}]$. $V_{02}$ output by the operational amplifier unit 1354 tends to be stable, the second input end of the comparator B receives a ramp voltage, and the ramp voltage gradually increases from 0 at a specified rate until the ramp voltage increases to the constant voltage $V_{th}$. When the ramp voltage gradually increases from 0, the counter in the mantissa output unit 136 starts to count at a specified periodicity, and a count value of the counter is incremented by 1 each time the specified periodicity elapses, until the ramp voltage input at the second input end of the comparator B increases to the voltage value $V_{O2}$ received by the first input end of the comparator B, the comparator B outputs a high-level control signal, to control the counter to stop counting, and the mantissa output unit 136 outputs a computed value of the counter as the mantissa part $D_M$ of the result floating-point number. The decoding unit in the dynamic adjustment unit 1352 uses a combination of values output by the OR gates corresponding to the plurality of flip-flops as a thermometer code, where the thermometer code represents a current conversion ratio parameter. The decoding unit converts the thermometer code into a binary code, to obtain the exponent part $D_E$ of the result floating-point number.

Similar to the dynamic adjustment unit 1352 and the quantization unit 1353 shown in FIG. 17, in some embodiments, the dynamic adjustment unit 1355 and the quantization unit 1356 each may use one comparator. For example, the dynamic adjustment unit 1355 uses the comparator A, and the quantization unit 1356 uses the comparator B. In some other embodiments, also refer to the manner shown in FIG. 9, the dynamic adjustment unit 1355 and the quantization unit 1356 share one comparator. In the self-adaptation phase, a second input end of the comparator may receive a constant voltage $V_{th}$. In the quantization phase, the second input end of the comparator may receive a ramp voltage that changes at a specified rate.

In the third optional embodiment, a static reading manner is used, and the analog-to-digital conversion module is enabled, through the dynamic adjustment unit, to support reading of a number in floating-point domain. In the static reading manner, an output voltage or an output current of the operational amplifier unit tends to be stable after an RC response effect. Therefore, specific sampling time does not need to be specified as a value, but it is ensured that the output voltage or the output current has been stable. If overall stable time of a circuit is 20 ns, sampling time of the circuit may be [20 ns, 200 ns]. This manner has a lower requirement on precision of the sampling time, and is subject to a case in which an output voltage or an output current has been stable, so that accuracy of a read result floating-point number can be improved.

The floating-point computation in embodiments of this application may be further applicable to the field of optical computing, and analog optical computing is also a form of analog computing. The following describes a computing apparatus for analog optical computing.

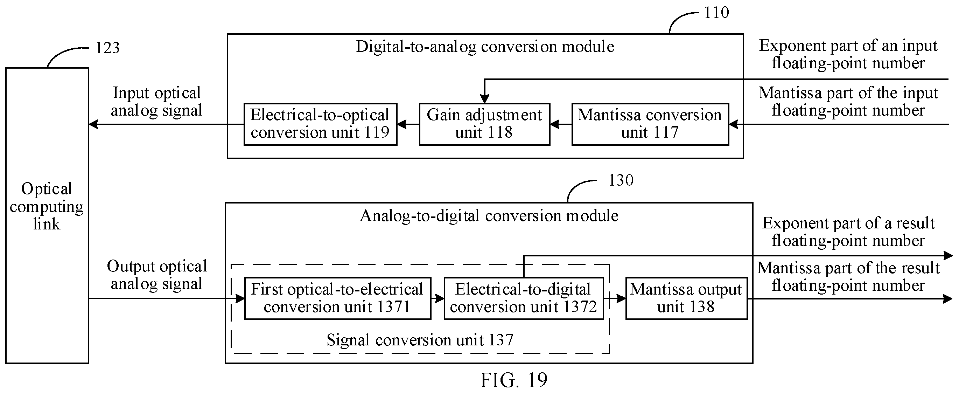

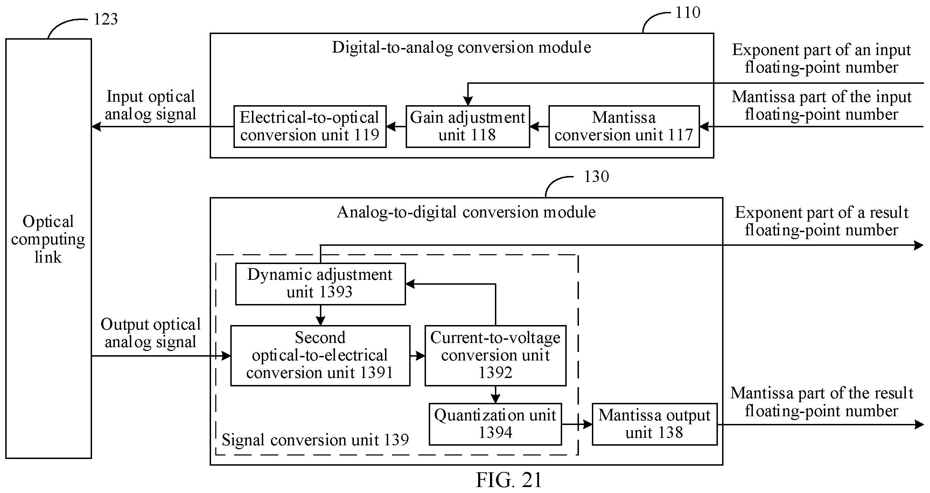

In a fourth optional embodiment, as shown in FIG. 19 and FIG. 21, the analog computing module may use an optical computing link 123. An input analog signal of the optical computing link 123 may be an input optical analog signal, in other words, the digital-to-analog conversion module 110 may be configured to convert an input floating-point number into the input optical analog signal.

As shown in FIG. 19 and FIG. 21, the digital-to-analog conversion module 110 may include a mantissa conversion unit 117, a gain adjustment unit 118, and an electrical-to-optical conversion unit 119. The mantissa conversion unit 117 may be configured to convert a mantissa part of the input floating-point number into an initial analog signal. The gain adjustment unit 118 may be configured to perform gain adjustment on the initial analog signal based on an exponent part of the input floating-point number, to obtain an input electrical analog signal. The electrical-to-optical conversion unit 119 may be configured to convert the input electrical analog signal into the input optical analog signal. The electrical-to-optical conversion unit 119 may be implemented by using a laser and a modulator.

In some embodiments, the mantissa conversion unit 117 may be implemented with reference to the structure of the foregoing mantissa conversion unit 113, and is configured to convert the mantissa part of the input floating-point number into an initial voltage analog signal. The gain adjustment unit 118 may be implemented with reference to the structure of the foregoing gain adjustment unit 114, and is configured to perform gain adjustment on the initial voltage analog signal based on the exponent part of the input floating-point number, to obtain an input voltage analog signal. The electrical-to-optical conversion unit 119 may convert the input voltage analog signal into the input optical analog signal.

In some other embodiments, the mantissa conversion unit 117 may be implemented with reference to the structure of the foregoing mantissa conversion unit 115, and is configured to convert the mantissa part of the input floating-point number into an initial current analog signal. The gain adjustment unit 118 may be implemented with reference to the structure of the foregoing gain adjustment unit 116, and is configured to perform gain adjustment on the initial current analog signal based on the exponent part of the input floating-point number, to obtain an input current analog signal. The electrical-to-optical conversion unit 119 may convert the input current analog signal into the input optical analog signal.

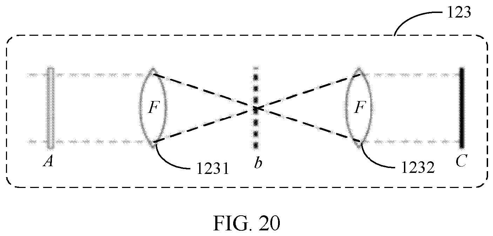

In the foregoing process, the digital-to-analog conversion module 110 may convert the input floating-point number into the input optical analog signal, and transmit the input optical analog signal to the analog computing module, namely, the optical computing link 123. The optical computing link 123 may include an optical modulator including a plurality of lenses. That the input optical analog signal passes through the optical modulator may be equivalent to that a multiplication operation is performed in frequency domain, to implement convolution in time domain. As shown in FIG. 20, a beam of light A (the input optical analog signal) passes through a first lens 1231, which is equivalent to completing a Fourier transform (FT) operation. Then, the beam is modulated by using a variable b in frequency domain, which is equivalent to completing multiplication in frequency domain. Subsequently, an inverse Fourier transform (IFT) operation is performed through a second lens 1232, to obtain an output result C (an output optical analog signal). The variable b may be understood as reference data pre-stored in the optical computing link. From the input optical analog signal A to the output optical analog signal C, frequency multiplication is completed. This is equivalent to completing a convolution operation in time domain.

A computation result analog signal output by the optical computing link 123 is an optical analog signal. The optical computing link 123 outputs the computation result analog signal to the analog-to-digital conversion module 130, and the analog-to-digital conversion module 130 converts the computation result analog signal into a result floating-point number.

In some embodiments, as shown in FIG. 19, the analog-to-digital conversion module 130 may include a signal conversion unit 137 and a mantissa output unit 138. The signal conversion unit 137 may be configured to: determine, based on the received output optical analog signal, a voltage value corresponding to a mantissa part of the result floating-point number, and output an exponent part of the result floating-point number. The mantissa output unit 138 may be configured to: output the mantissa part of the result floating-point number based on the voltage value corresponding to the mantissa part of the result floating-point number.

The signal conversion unit 137 may include a first optical-to-electrical conversion unit 1371 and an electrical-to-digital conversion unit 1372. The first optical-to-electrical conversion unit 1371 may be configured to convert the output optical analog signal into an output current analog signal. The electrical-to-digital conversion unit 1372 may be configured to: determine, based on the output current analog signal, the voltage value corresponding to the mantissa part of the result floating-point number, and output the exponent part of the result floating-point number. For example, the first optical-to-electrical conversion unit 1371 may use a photosensitive diode or a photodiode (photodiode). The electrical-to-digital conversion unit 1372 may be implemented with reference to the structure of the foregoing signal conversion unit 133, or implemented with reference to the structure of the foregoing signal conversion unit 135. Details are not described herein again.

In some other embodiments, as shown in FIG. 21, the analog-to-digital conversion module 130 may include a signal conversion unit 139 and a mantissa output unit 138. The signal conversion unit 139 may be configured to: determine, based on the received output optical analog signal, a voltage value corresponding to a mantissa part of the result floating-point number, and output an exponent part of the result floating-point number. The mantissa output unit 138 may be configured to: output the mantissa part of the result floating-point number based on the voltage value corresponding to the mantissa part of the result floating-point number.

The signal conversion unit 139 may include a second optical-to-electrical conversion unit 1391, a current-to-voltage conversion unit 1392, a dynamic adjustment unit 1393, and a quantization unit 1394. The second optical-to-electrical conversion unit 1391 may be configured to output a current signal based on the received output optical analog signal. The current-to-voltage conversion unit 1392 may be configured to output a third voltage based on the current signal output by the second optical-to-electrical conversion unit. The dynamic adjustment unit 1393 is configured to adjust, based on variation of the third voltage, a conversion ratio parameter of the second optical-to-electrical conversion unit for the output optical analog signal, until a variation amplitude of the third voltage is less than or equal to a second specified amplitude threshold. The quantization unit 1394 may be configured to determine, based on the third voltage whose variation amplitude is less than or equal to the second specified amplitude threshold, the voltage value corresponding to the mantissa part of the result floating-point number. The dynamic adjustment unit 1393 may be further configured to output the exponent part of the result floating-point number based on the conversion ratio parameter of the second optical-to-electrical conversion unit 1391 for the output optical analog signal when the variation amplitude of the third voltage is less than or equal to the second specified amplitude threshold.

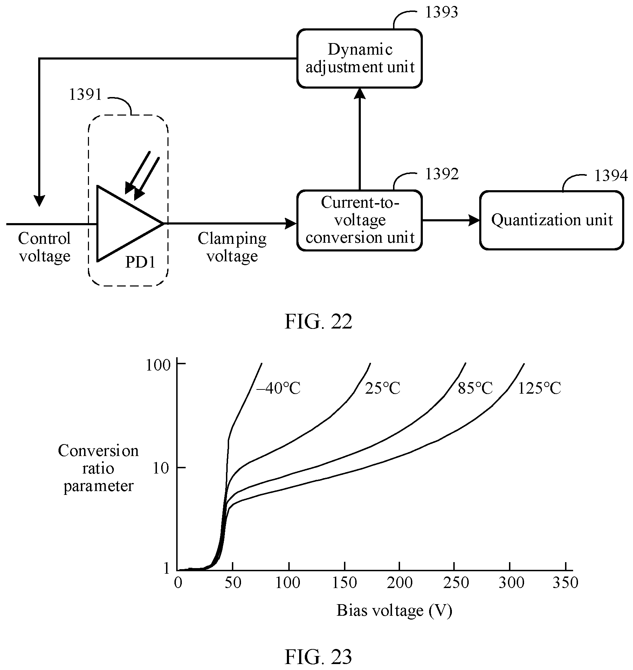

For example, as shown in FIG. 22, the second optical-to-electrical conversion unit 1391 may use a photosensitive diode or a photodiode PD1, where one end of the photodiode PD1 is configured to receive a control voltage, an output end of the photodiode PD1 is configured to receive a clamping voltage, and a voltage difference between the control voltage and the clamping voltage is referred to as a bias voltage of the photodiode PD1. The current-to-voltage conversion unit 1392 is connected to the output end of the photodiode PD1. The photodiode PD1 may receive the output optical analog signal of the optical computing link, and convert the output optical analog signal into a current signal. The current-to-voltage conversion unit 1392 may convert the current signal into a voltage signal, and output a third voltage. Applying different bias voltages to the photodiode PD1 may enable the photodiode PD1 to have different conversion ratio parameters for the output optical analog signal. The dynamic adjustment unit 1393 is connected to an output end of the current-to-voltage conversion unit 1392, and receives the third voltage output by the current-to-voltage conversion unit 1392. When detecting that the third voltage reaches a specified voltage value, the dynamic adjustment unit 1393 may adjust the conversion ratio parameter of the photodiode PD1 for the output optical analog signal by reducing the bias voltage of the photodiode PD1.

For example, the dynamic adjustment unit 1393 may include a bias voltage computing unit and a bias voltage generation unit. During initial working, the bias voltage of the photodiode PD1 is set to an initial value. The dynamic adjustment unit 1393 monitors in real time whether the third voltage reaches the specified voltage value. If the third voltage reaches the specified voltage value, the dynamic adjustment unit 1393 may determine, through the bias voltage computing unit, a bias voltage at a corresponding next level after the adjustment. The bias voltage computing unit may determine a bias voltage corresponding to a conversion ratio parameter of a next level (a gain is reduced to half) of a current level by querying a table of correspondences between conversion ratio parameters (gains) of different levels and bias voltages. The correspondences between the gains and the bias voltages may also be represented by using a curve chart shown in FIG. 23. Conversion ratio parameters 100, 10, and 1 in FIG. 23 respectively correspond to a first level, a second level, and a third level. The correspondence between the gain and the bias voltage varies in different temperatures. The bias voltage computing unit may determine a bias voltage corresponding to a conversion ratio parameter of a next level of a current level by querying the table based on a current temperature, and determine a control voltage corresponding to the photodiode PD1 based on the bias voltage and a clamping voltage. The control voltage is a digital signal. The bias voltage generation unit may use a digital-to-analog converter. The digital-to-analog converter may convert the digital signal into a voltage analog signal, and adjust the control voltage of the photodiode PD1 by using the voltage analog signal. Therefore, the bias voltage of the photodiode PD1 is adjusted, and the conversion ratio parameter is adjusted from the current level to the next level, so that the conversion ratio parameter corresponds to the bias voltage. The foregoing steps are cyclically performed until the variation amplitude of the third voltage is less than or equal to the second specified amplitude threshold and the third voltage is less than the specified voltage value. The dynamic adjustment unit 1393 may output the exponent part of the result floating-point number based on the conversion ratio parameter of the second optical-to-electrical conversion unit 1391 for the output optical analog signal. The quantization unit 1394 may determine, based on the third voltage whose variation amplitude is less than or equal to the second specified amplitude threshold, the voltage value corresponding to the mantissa part of the result floating-point number. The mantissa output unit 138 may be configured to output the mantissa part of the result floating-point number based on the voltage value corresponding to the mantissa part of the result floating-point number.

The foregoing embodiment may be applied to an analog optical computing system, so that floating-point processing may be performed through optical computing, and a solution for implementing self-adaptation dynamic range adjustment on an optical-to-electrical conversion unit is provided.

The transistor in the foregoing embodiments may use a PNP-type transistor or a PNP-type triode, or may use an NPN-type transistor or an NPN-type triode.

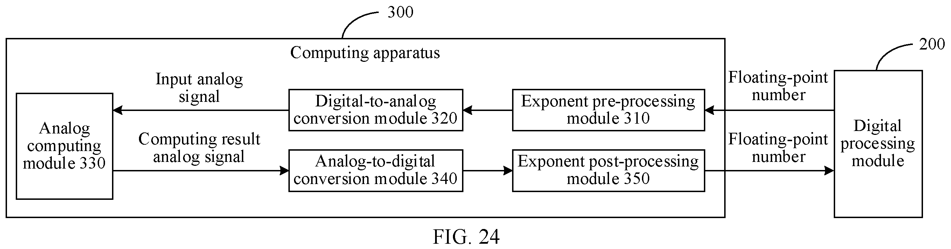

In the foregoing embodiments, the exponent part of the input floating-point number is directly sent to the digital-to-analog conversion module for signal conversion. In a fifth optional embodiment, an exponent part of a floating-point number may be adjusted first, and then sent to the digital-to-analog conversion module for signal conversion. As shown in FIG. 24, a computing apparatus 300 provided in this embodiment may include: an exponent pre-processing module 310, a digital-to-analog conversion module 320, an analog computing module 330, an analog-to-digital conversion module 340, and an exponent post-processing module 350. The exponent pre-processing module 310 is connected between a digital processing module 200 and the digital-to-analog conversion module 320. The exponent pre-processing module 310 is configured to: receive a plurality of to-be-processed floating-point numbers input by the digital processing module 200, adjust exponent parts of the plurality of to-be-processed floating-point numbers to obtain a plurality of input floating-point numbers, and input the plurality of input floating-point numbers into the digital-to-analog conversion module 320. The digital-to-analog conversion module 320 is configured to convert the input floating-point number into an input analog signal, and the digital-to-analog conversion module 320 may be implemented by using the digital-to-analog conversion module provided in any one of the foregoing embodiments. The analog computing module 330 is configured to perform analog computing based on the input analog signal to obtain a computation result analog signal. The analog computing module 330 may use the analog computing module provided in any one of the foregoing embodiments. The analog-to-digital conversion module 340 is configured to convert the computation result analog signal into a result floating-point number. The analog-to-digital conversion module 340 may use the analog-to-digital conversion module provided in any one of the foregoing embodiments. Details are not described herein again. The exponent post-processing module 350 is connected between the analog-to-digital conversion module 340 and the digital processing module 200. The analog-to-digital conversion module 340 transmits the result floating-point number to the connected exponent post-processing module 350. The exponent post-processing module 350 is configured to: receive the result floating-point number output by the analog-to-digital conversion module, adjust an exponent part of the result floating-point number to obtain a target result floating-point number, and transmit the target result floating-point number to the digital processing module 200.

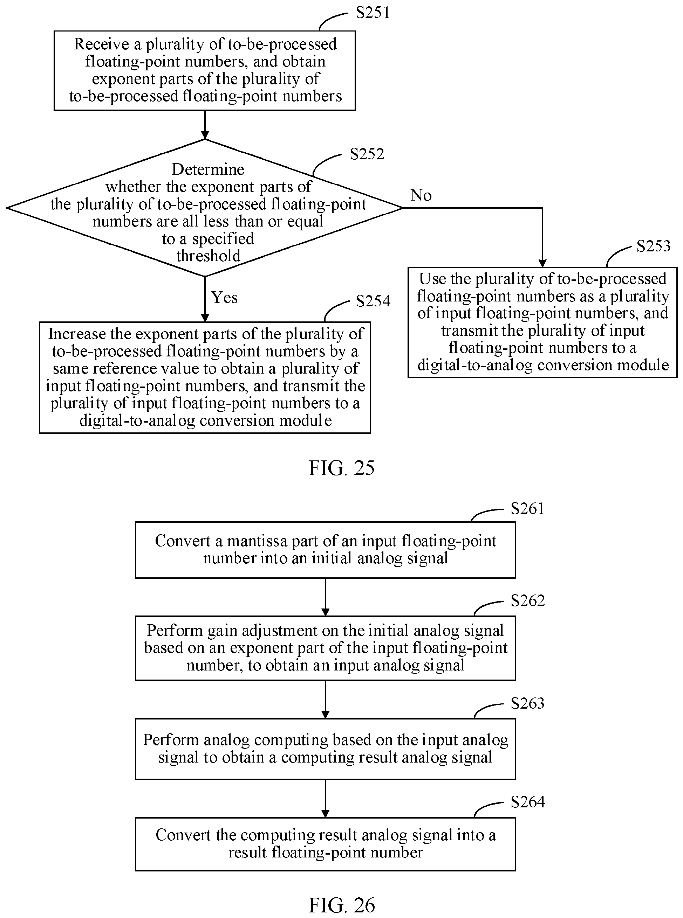

In some embodiments, the exponent pre-processing module 310 may adjust exponent parts of a plurality of to-be-processed floating-point numbers by using a procedure shown in FIG. 25. The process may include the following steps.

S251: Receive a plurality of to-be-processed floating-point numbers, and obtain exponent parts of the plurality of to-be-processed floating-point numbers.

S252: Determine whether the exponent parts of the plurality of to-be-processed floating-point numbers are all less than or equal to a specified threshold; and if yes, perform step S254; or if not, perform step S253.

When there are a plurality of floating-point numbers participating in computing, the exponent pre-processing module 310 receives the plurality of to-be-processed floating-point numbers, where each to-be-processed floating-point number includes an exponent part and a mantissa part. The exponent pre-processing module 310 obtains the exponent part of each to-be-processed floating-point number, and determines whether the exponent part of each to-be-processed floating-point number is less than or equal to the specified threshold.

For example, assuming that the exponent part of the to-be-processed floating-point number is three bits, a dynamic range of a floating-point number processed by the computing apparatus is $[2^0, 2^7]$, in other words, a largest floating-point number processed by the computing apparatus is 128 times a smallest floating-point number. An analog signal obtained by converting a floating-point number with a smallest exponent part (the exponent part is 0) is small, and is greatly affected by noise. If exponent parts of a plurality of to-be-processed floating-point numbers that are input in a time of computing are all small, and are all less than or equal to the specified threshold, the exponent parts of the plurality of to-be-processed floating-point numbers may be increased. For example, the specified threshold may be 3. Assuming that exponent parts of a plurality of to-be-processed floating-point numbers that are input in a time of computing are all in $[2^0, 2^2]$, it is considered that the exponent parts of the plurality of to-be-processed floating-point numbers are all less than or equal to the specified threshold, and the exponent parts of the plurality of to-be-processed floating-point numbers may be increased.

S253: Use the plurality of to-be-processed floating-point numbers as a plurality of input floating-point numbers, and transmit the plurality of input floating-point numbers to the digital-to-analog conversion module.

If an exponent part of at least one of the plurality of to-be-processed floating-point numbers is greater than the specified threshold, the exponent parts of the plurality of to-be-processed floating-point numbers may not be adjusted, and the plurality of to-be-processed floating-point numbers are used as the plurality of input floating-point numbers, and are directly transmitted to the digital-to-analog conversion module.

S254: Increase the exponent parts of the plurality of to-be-processed floating-point numbers by a same reference value to obtain a plurality of input floating-point numbers, and transmit the plurality of input floating-point numbers to the digital-to-analog conversion module.

If the exponent parts of the plurality of to-be-processed floating-point numbers are all less than or equal to the specified threshold, the exponent parts of the plurality of to-be-processed floating-point numbers may be increased by the same reference value to obtain the plurality of input floating-point numbers. The reference value may be determined based on a difference between a largest value in the exponent parts of the plurality of to-be-processed floating-point numbers and a theoretical largest exponent. It is assumed that the largest value in the exponent parts of the plurality of to-be-processed floating-point numbers is A, and the theoretical largest exponent of the floating-point numbers is B. In this case, the reference value C=B-A. When the exponent part of the floating-point number is three bits, and the dynamic range of the floating-point number processed by the computing apparatus is $[2^0, 2^7]$, the theoretical largest exponent B is 7. If exponent parts of a plurality of to-be-processed floating-point numbers that are input in a time of computing are all in $[2^0, 2^2]$, in other words, the largest value A in the exponent parts of the plurality of to-be-processed floating-point numbers is 2, B-A=7-2=5, that is, C is 5. The exponent pre-processing module 310 may store the value of C, and increase the exponent parts of the plurality of to-be-processed floating-point numbers by 5 to obtain a plurality of input floating-point numbers, where exponent parts of the plurality of input floating-point numbers are in $[2^5, 2^7]$. In this case, the plurality of input floating-point numbers are transmitted to the digital-to-analog conversion module. After the digital-to-analog conversion module converts the plurality of input floating-point numbers into analog signals, the obtained analog signals are $2^5$=32 times of original analog signals, and is less affected by noise. This facilitates obtaining of an accurate computation result.

Because the exponent parts of the floating-point numbers are adjusted when the exponent parts of the floating-point numbers pass through the exponent pre-processing module 310, after the result floating-point number is obtained, the exponent post-processing module 350 may adjust the exponent part of the result floating-point number. For example, after receiving the result floating-point number, the exponent post-processing module 350 may read the value of C that is stored in the exponent pre-processing module 310, and determine whether the value of C is 0. If the value of C is 0, the result floating-point number may be directly output to a digital computing module. If the value of C is not 0, the reference value C may be subtracted from the exponent part of the received result floating-point number to obtain a target result floating-point number, and the target result floating-point number is output to the digital computing module.

The foregoing embodiment may be applicable to an application scenario in which an analog computational process is linear computing. For example, when the analog computing module uses an RRAM array, assuming that a formula for analog computing is MAC(IN)=OUT in the first or third optional embodiment, a formula for analog computing is $\{MAC(2^C*IN)\}*2^{-C}$=OUT in the fifth optional embodiment. It can be learned that a result floating-point number obtained through the computing is unchanged.

In some embodiments, a plurality of input floating-point numbers may be computed with reference data pre-stored in the analog computing module. It is assumed that the reference data is a floating-point number, and before the reference data is stored in the analog computing module, the digital pre-processing module may adjust an exponent part of parameter data. For example, if the parameter data (a parameter matrix G or an original conductance matrix G) is excessively large or excessively small as a whole, the parameter data is difficult to be programmed into an array device of the analog computing module. In this case, exponential transformation of the entire parameter matrix G may be moved to the exponent pre-processing module or the exponent post-processing module in an equivalent transformation manner. For example, an original computing manner is as follows:

$$[V_1 \quad V_2 \quad \ldots \quad V_n] \times \begin{bmatrix} G_{11} & G_{12} & \ldots & G_{1m} \\ G_{21} & G_{22} & \ldots & G_{2m} \\ \ldots & \ldots & \ldots & \ldots \\ G_{n1} & G_{n2} & \ldots & G_{nm} \end{bmatrix} = [I_1 \quad I_2 \quad \ldots \quad I_m]$$

If the overall parameter matrix G is moved to the exponent pre-processing module, assuming that the exponent pre-processing module increases exponent parts of a plurality of to-be-processed floating-point numbers by n to obtain a plurality of input floating-point numbers, the exponent pre-processing module may decrease exponent parts of the parameter matrix G by n, which may be expressed as:

$$[2^n V_1 \quad 2^n V_2 \quad \ldots \quad 2^n V_n] \times \begin{bmatrix} G_{11}/2^n & G_{12}/2^n & \ldots & G_{1m}/2^n \\ G_{21}/2^n & G_{22}/2^n & \ldots & G_{2m}/2^n \\ \ldots & \ldots & \ldots & \ldots \\ G_{n1}/2^n & G_{n2}/2^n & \ldots & G_{nm}/2^n \end{bmatrix} = [I_1 \quad I_2 \quad \ldots \quad I_m]$$

If the overall parameter matrix G is moved to the exponent post-processing module, assuming that exponent parts of the parameter matrix G are increased by n, an exponent part of a result floating-point number received by the exponent post-processing module is increased by n. In this case, the exponent post-processing module may decrease the exponent part of the result floating-point number by n, which may be expressed as:

$$[V_1 \quad V_2 \quad \ldots \quad V_n] \times \begin{bmatrix} 2^n G_{11} & 2^n G_{12} & \ldots & 2^n G_{1m} \\ 2^n G_{21} & 2^n G_{22} & \ldots & 2^n G_{2m} \\ \ldots & \ldots & \ldots & \ldots \\ 2^n G_{n1} & 2^n G_{n2} & \ldots & 2^n G_{nm} \end{bmatrix} = [2^n I_1 \quad 2^n I_2 \quad \ldots \quad 2^n I_m]$$

In the foregoing process, the parameter data or the parameter matrix may be processed in a "floating-point offset" manner, so that the parameter data or the parameter matrix supports a "block floating-point" data format.

In some other embodiments, the analog computing module may perform computing on a plurality of groups of input floating-point numbers, and each group of input floating-point numbers may include one or more floating-point numbers. For example, the analog computing module may first store a received first group of input floating-point numbers, and when receiving a second group of input floating-point numbers, compute the second group of input floating-point numbers and the first group of input floating-point numbers. When the analog computing module is configured to compute a plurality of groups of input floating-point numbers, the analog computing module may adjust exponent parts of the floating-point numbers by group. For example, the exponent pre-processing module may be configured to: adjust exponent parts of a plurality of first to-be-processed floating-point numbers based on a first value to obtain a first group of input floating-point numbers, and adjust exponent parts of a plurality of second to-be-processed floating-point numbers based on a second value to obtain a second group of input floating-point numbers. The exponent post-processing module may be configured to adjust the exponent part of the result floating-point number based on the first value and the second value. The first value and the second value may be a same value or may be different values.

For example, the analog computing module may perform vector multiplication on the first group of input floating-point numbers and the second group of input floating-point numbers, which may be represented as $Mul(X,Y)=Z$ and $z[i]=x[i]*y[i]$ by using formulas. X represents the first group of input floating-point numbers, Y represents the second group of input floating-point numbers, $x[i]$ represents an $i^{th}$ input floating-point number in the first group of input floating-point numbers, and $y[i]$ represents an $i^{th}$ input floating-point number in the second group of input floating-point numbers. The exponent pre-processing module may separately perform the procedure shown in FIG. 25 on to-be-processed floating-point numbers corresponding to the first group of input floating-point numbers X and to-be-processed floating-point numbers corresponding to the second group of input floating-point numbers Y, adjust the exponent parts of the plurality of first to-be-processed floating-point numbers based on the first value $C_X$ to obtain the first group of input floating-point numbers, and adjust the exponent parts of the plurality of second to-be-processed floating-point numbers based on the second value $C_Y$ to obtain the second group of input floating-point numbers. The exponent post-processing module may be configured to adjust the exponent part of the result floating-point number based on the first value $C_X$ and the second value $C_Y$. If the exponent pre-processing module increases the exponent parts of the plurality of first to-be-processed floating-point numbers by $C_X$ and increases the exponent parts of the plurality of second to-be-processed floating-point numbers by $C_Y$, the exponent post-processing module may decrease the exponent part of the result floating-point number by $C_X + C_Y$. The process may be expressed as $2^{-(C_X+C_Y)}*Mul(2^{C_X}*X, 2^{C_Y}*Y)=Z$.

In another embodiment, to make it easier to input the input floating-point number into the analog computing module, the exponent pre-processing module may also decrease the exponent part of the to-be-processed floating-point number to obtain the input floating-point number.

In the foregoing embodiment, the exponent pre-processing module performs exponent pre-processing on the floating-point number in digital domain, so that an exponent part of a vector formed by a plurality of floating-point numbers in a single time of computing is increased or decreased as a whole. For example, when a dynamic range of an input floating-point number is not large and an exponent part is small, exponent parts of a plurality of floating-point numbers may be increased, so that an input analog signal converted by the analog-to-digital conversion module is large, and a signal-to-noise ratio of analog computing can be improved.

An embodiment of this application further provides a computing chip. The computing chip may be the computing chip 10 shown in FIG. 1. The computing apparatus provided in the foregoing embodiment is deployed in the computing chip, and the computing apparatus may be understood as a computing module in the computing chip. The computing chip may be a processor chip, for example, a CPU chip, a GPU chip, a DSP chip, or an AI chip.

Based on a same design concept as the foregoing embodiment, an embodiment of this application further provides a floating-point computation method. As shown in FIG. 26, the floating-point computation method may include the following steps.

S261: Convert a mantissa part of an input floating-point number into an initial analog signal.

S262: Perform gain adjustment on the initial analog signal based on an exponent part of the input floating-point number, to obtain an input analog signal.

When performing computing for a floating-point number, the computing apparatus receives an input floating-point number, where the input floating-point number may include an exponent part and a mantissa part. The computing apparatus may convert the mantissa part M of the input floating-point number into an initial analog signal through a digital-to-analog conversion module, and perform gain adjustment on the initial analog signal based on the exponent part E of the input floating-point number, to obtain an input analog signal.

In some embodiments, the input analog signal may be an input voltage analog signal. The computing apparatus may convert the mantissa part M of the input floating-point number into an initial voltage analog signal. This process may be represented as: $V_{in}(M)=M$. The computing apparatus may perform gain adjustment on the initial voltage analog signal based on the exponent part E of the input floating-point number, to obtain the input voltage analog signal. In a floating-point number computation scenario in which 2 is used as a base, the process may be represented as $V_{in}(E, M)=V_{in}(M)*2^E=M*2^E$.

In some other embodiments, the input analog signal may be an input current analog signal. The computing apparatus may convert the mantissa part M of the input floating-point number into an initial current analog signal, and perform gain adjustment on the initial current analog signal based on the exponent part E of the input floating-point number, to obtain the input current analog signal.

In some other embodiments, the input analog signal may be an input optical analog signal. The computing apparatus may convert the input floating-point number into an input electrical analog signal, and then convert the input electrical analog signal into the input optical analog signal.

S263: Perform analog computing based on the input analog signal to obtain a computation result analog signal.

The computing apparatus may perform, through an analog computing module, analog computing such as multiplication, division, multiplication and addition, and nonlinear analog computing based on the input analog signal, to obtain the computation result analog signal.

S264: Convert the computation result analog signal into a result floating-point number.

The computing apparatus may determine, based on the computation result analog signal, a voltage value corresponding to a mantissa part of the result floating-point number and an exponent part of the result floating-point number, and output the mantissa part of the result floating-point number based on the voltage value corresponding to the mantissa part of the result floating-point number. This process may be expressed as: $V_{out}(E, M)=M*2^E$.

In some embodiments, the computation result analog signal may be an output current analog signal. The computing apparatus may cyclically perform the following steps over a specified period of time: integrating the output current analog signal based on a first ratio parameter, to obtain a first voltage, and adjusting the first ratio parameter based on variation of the first voltage; determining, based on the first voltage obtained upon expiration of the specified period of time, a voltage value corresponding to the mantissa part of the result floating-point number; and outputting the exponent part of the result floating-point number based on the first ratio parameter corresponding to the expiration of the specified period of time.

In some other embodiments, the computation result analog signal may be an output current analog signal. The computing apparatus may cyclically perform the following steps: converting the output current analog signal into a second voltage based on a second ratio parameter, and adjusting the second ratio parameter based on variation of the second voltage until a variation amplitude of the second voltage is less than or equal to a specified voltage amplitude threshold; determining, based on the second voltage whose variation amplitude is less than or equal to the specified voltage amplitude threshold, a voltage value corresponding to the mantissa part of the result floating-point number; and outputting the exponent part of the result floating-point number based on the second ratio parameter when the variation amplitude of the second voltage is less than or equal to the specified voltage amplitude threshold.

In some other embodiments, the computation result analog signal may be an output current analog signal. The computing apparatus may cyclically perform the following steps: adjusting, based on a third ratio parameter, a first current obtained based on the output current analog signal to obtain a second current, adjusting the third ratio parameter based on variation of the second current until a variation amplitude of the second current is less than or equal to a specified current amplitude threshold; determining, based on the second current whose variation amplitude is less than or equal to the specified current amplitude threshold, a voltage value corresponding to the mantissa part of the result floating-point number; and outputting the exponent part of the result floating-point number based on the third ratio parameter when the variation amplitude of the second current is less than or equal to the specified current amplitude threshold.

In some other embodiments, the computation result analog signal may be an output optical analog signal. The computing apparatus may determine, based on the output optical analog signal, a voltage value corresponding to the mantissa part of the result floating-point number and the exponent part of the result floating-point number, and output the mantissa part of the result floating-point number based on the voltage value corresponding to the mantissa part of the result floating-point number. For example, the computing apparatus may convert the output optical analog signal into an output current analog signal, and determine, based on the output current analog signal, a voltage value corresponding to the mantissa part of the result floating-point number and the exponent part of the result floating-point number.

In some other embodiments, the computation result analog signal may be an output optical analog signal. The computing apparatus may cyclically perform the following steps: converting the output optical analog signal into a current signal based on a fourth ratio parameter, converting the current signal into a third voltage, adjusting the fourth ratio parameter based on variation of the third voltage until a variation amplitude of the third voltage is less than or equal to a specified amplitude threshold; determining, based on the third voltage whose variation amplitude is less than or equal to the specified amplitude threshold, a voltage value corresponding to the mantissa part of the result floating-point number; and outputting the exponent part of the result floating-point number based on the fourth ratio parameter when the variation amplitude of the third voltage is less than or equal to the specified amplitude threshold.

In the foregoing embodiment, the input floating-point number is converted into the input analog signal, and the computing of the floating-point number is completed in analog domain. This can improve computational efficiency. In addition, the mantissa part of the input floating-point number is first processed, the mantissa part of the input floating-point number is converted into the initial analog signal, and then the gain adjustment is performed on the initial analog signal in analog domain based on the exponent part of the input floating-point number, to obtain the input analog signal. When exponent parts of input floating-point numbers are different, gain multiples of the gain adjustment unit for initial analog signals are different, and magnitudes of obtained input analog signals are also different. In this way, a plurality of input analog signals with different exponent parts may be converted into a plurality of input analog signals with different magnitudes.

In some embodiments, before converting the input floating-point number into the input analog signal, the computing apparatus may further perform exponent pre-processing on a to-be-processed floating-point number. An exponent pre-processing process may include: obtaining a plurality of to-be-processed floating-point numbers, and adjusting exponent parts of the plurality of to-be-processed floating-point numbers to obtain a plurality of input floating-point numbers. The computing apparatus may further perform exponent post-processing on the result floating-point number after obtaining the result floating-point number. An exponent post-processing process may include: adjusting the exponent part of the result floating-point number, and outputting a target result floating-point number.

In an optional embodiment, when each of the exponent parts of the plurality of to-be-processed floating-point numbers is less than or equal to a specified threshold, the computing apparatus may increase the exponent parts of the plurality of to-be-processed floating-point numbers by a same reference value to obtain the plurality of input floating-point numbers. The reference value is determined based on a largest value in the exponent parts of the plurality of to-be-processed floating-point numbers. After the computation result analog signal is converted into the result floating-point number, the exponent part of the result floating-point number may be reduced by the reference value to obtain the target result floating-point number.

In an optional embodiment, the input floating-point numbers include a first group of input floating-point numbers and a second group of input floating-point numbers. The computing apparatus may adjust exponent parts of a plurality of first to-be-processed floating-point numbers based on a first value to obtain the first group of input floating-point numbers, and adjust exponent parts of a plurality of second to-be-processed floating-point numbers based on a second value to obtain the second group of input floating-point numbers. After the computation result analog signal is converted into the result floating-point number, the exponent part of the result floating-point number may be adjusted based on the first value and the second value.

The exponent pre-processing and exponent post-processing processes performed by the computing apparatus may be completed in digital domain by hardware, or may be completed by executing a computer program, to be specific, may be completed by software, or may be completed by both software and hardware. Moreover, a form of a computer program product that is implemented on one or more computer-usable storage media (including but not limited to a disk memory, a CD-ROM, an optical memory, and the like) that include computer-usable program code may further be used.

It is clearly that a person skilled in the art can make various modifications and variations to this application without departing from the spirit and scope of this application. This application is intended to cover these modifications and variations of this application provided that they fall in the scope of protection defined by the following claims and their equivalent technologies.

**Claims**

1. A computing apparatus, comprising:

   a digital-to-analog conversion module, configured to: convert a mantissa part of an input floating-point number into an initial analog signal, and perform gain adjustment on the initial analog signal based on an exponent part of the input floating-point number, to obtain an input analog signal;
   an analog computing module, configured to perform analog computing based on the input analog signal to obtain a computation result analog signal; and
   an analog-to-digital conversion module, configured to convert the computation result analog signal into a result floating-point number.

2. The computing apparatus according to claim 1, wherein the analog-to-digital conversion module comprises:

a signal conversion unit, configured to: determine, based on the computation result analog signal, a voltage value corresponding to a mantissa part of the result floating-point number, and output an exponent part of the result floating-point number; and

a mantissa output unit, configured to output the mantissa part of the result floating-point number based on the voltage value corresponding to the mantissa part of the result floating-point number.

3. The computing apparatus according to claim 2, wherein the computation result analog signal is an output current analog signal; and the signal conversion unit comprises a first conversion unit and a first dynamic adjustment unit, wherein

the first conversion unit is configured to convert the output current analog signal into a voltage signal; and

the first dynamic adjustment unit is configured to adjust, based on variation of the voltage signal, a conversion ratio parameter of the first conversion unit for the output current analog signal, wherein the conversion ratio parameter represents the exponent part of the result floating-point number, and the voltage signal output by the first conversion unit represents the voltage value corresponding to the mantissa part of the result floating-point number.

4. The computing apparatus according to claim 3, wherein the signal conversion unit further comprises a first quantization unit, and the first conversion unit is an active integrator unit, wherein

the active integrator unit is configured to integrate the output current analog signal over a specified period of time to obtain a first voltage;

the first quantization unit is configured to transmit a control signal to the first dynamic adjustment unit over the specified period of time based on variation of the first voltage;

the first dynamic adjustment unit is configured to adjust, over the specified period of time based on the control signal from the first quantization unit, a conversion ratio parameter of the active integrator unit for the output current analog signal;

the first quantization unit is further configured to determine, based on the first voltage output by the active integrator unit upon expiration of the specified period of time, the voltage value corresponding to the mantissa part of the result floating-point number; and

the first dynamic adjustment unit is further configured to output the exponent part of the result floating-point number based on the conversion ratio parameter of the active integrator unit for the output current analog signal upon expiration of the specified period of time.

5. The computing apparatus according to claim 4, wherein the active integrator unit comprises an integrator, and the integrator is configured to: receive the output current analog signal, and output the first voltage based on the output current analog signal;

the first quantization unit comprises a first comparator, wherein a first input end of the first comparator is connected to an output end of the integrator, and is configured to receive the first voltage output by the integrator, a second input end of the first comparator is configured to be connected to a ramp signal generation circuit, and the ramp signal generation circuit is configured to: provide a constant voltage for the first comparator over the specified period of time, and provide, for the first comparator after the specified period of time elapses, a ramp voltage that changes at a specified rate; and

the first dynamic adjustment unit comprises a plurality of capacitor branches, wherein a first end of each of the plurality of capacitor branches is connected to an input end of the integrator, a second end is connected to the output end of the integrator, and each capacitor branch is connected to one flip-flop; and an input end of each flip-flop is connected to an output end of the first comparator, and is configured to control, under action of the control signal output by the first comparator, a corresponding capacitor branch to be connected or disconnected, to adjust the conversion ratio parameter of the active integrator unit for the output current analog signal.

6. The computing apparatus according to claim 3, wherein the signal conversion unit further comprises a second quantization unit, and the first conversion unit is an operational amplifier unit, wherein

the operational amplifier unit is configured to output a second voltage based on the output current analog signal;

the first dynamic adjustment unit is configured to adjust, based on variation of the second voltage, a conversion ratio parameter of the operational amplifier unit for the output current analog signal until a variation amplitude of the second voltage is less than or equal to a first specified amplitude threshold;

the second quantization unit is configured to determine, based on the second voltage whose variation amplitude is less than or equal to the first specified amplitude threshold, the voltage value corresponding to the mantissa part of the result floating-point number; and

the first dynamic adjustment unit is further configured to output the exponent part of the result floating-point number based on the conversion ratio parameter of the operational amplifier unit for the output current analog signal when the variation amplitude of the second voltage is less than or equal to the first specified amplitude threshold.

7. The computing apparatus according to claim 6, wherein the operational amplifier unit comprises a first operational amplifier, and the first operational amplifier is configured to: receive the output current analog signal and output the second voltage; and

the first dynamic adjustment unit comprises a second comparator, a plurality of flip-flops, and a plurality of switched resistor branches, wherein a first input end of the second comparator is connected to an output end of the first operational amplifier, and is configured to receive the second voltage output by the first operational amplifier, and a second input end of the second comparator is configured to input a reference voltage; the second comparator is configured to output a control signal based on the change of the second voltage; a first end of each of the plurality of switched resistor branches is connected to an input end of the first operational amplifier, and a second end is connected to the output end of the first operational amplifier; an input end of each of the plurality of flip-flops is connected to an output end of the second comparator; and an output end of each of the plurality of flip-flops is connected to a corresponding switched resistor branch among the plurality of switched resistor branches, and is configured to control, under action of the control signal output by the second comparator, the corresponding switched resistor branch to be connected or disconnected, to adjust the conversion ratio parameter of the operational amplifier unit for the output current analog signal.

8. The computing apparatus according to claim 6, wherein the operational amplifier unit comprises an operational amplifier negative feedback circuit, a plurality of transistor branches, and a current-to-voltage converter, wherein the operational amplifier negative feedback circuit is configured to receive the output current analog signal, the plurality of transistor branches are connected between an output end of the operational amplifier negative feedback circuit and an input end of the current-to-voltage converter, and the current-to-voltage converter is configured to convert a current signal output by the plurality of transistor branches into the second voltage; and the first dynamic adjustment unit comprises a third comparator and a plurality of flip-flops, wherein a first input end of the third comparator is connected to an output end of the current-to-voltage converter, and is configured to receive the second voltage output by the operational amplifier unit; a second input end of the third comparator is configured to input a reference voltage; an input end of each of the plurality of flip-flops is connected to an output end of the third comparator; and an output end of each of the plurality of flip-flops is connected to a corresponding transistor branch of the plurality of transistor branches, and is configured to control, under an action of a control signal output by the third comparator, the corresponding transistor branch to be connected or disconnected, to adjust the conversion ratio parameter of the operational amplifier unit for the output current analog signal.

9. The computing apparatus according to claim 2, wherein the computation result analog signal is an output optical analog signal; and the signal conversion unit comprises:

a first optical-to-electrical conversion unit, configured to convert the output optical analog signal into an output current analog signal; and

an electrical-to-digital conversion unit, configured to: determine, based on the output current analog signal, the voltage value corresponding to the mantissa part of the result floating-point number, and output the exponent part of the result floating-point number.

10. The computing apparatus according to claim 2, wherein the computation result analog signal is an output optical analog signal; and the signal conversion unit comprises:

a second optical-to-electrical conversion unit, configured to output a current signal based on the output optical analog signal;

a current-to-voltage conversion unit, configured to output a third voltage based on the current signal output by the second optical-to-electrical conversion unit;

a second dynamic adjustment unit, configured to adjust, based on variation of the third voltage, a conversion ratio parameter of the second optical-to-electrical conversion unit for the output optical analog signal until a variation amplitude of the third voltage is less than or equal to a second specified amplitude threshold; and

a third quantization unit, configured to determine, based on the third voltage whose variation amplitude is less than or equal to the second specified amplitude threshold, the voltage value corresponding to the mantissa part of the result floating-point number, wherein

the second dynamic adjustment unit is further configured to output the exponent part of the result floating-point number based on the conversion ratio parameter of the second optical-to-electrical conversion unit for the output optical analog signal when the variation amplitude of the third voltage is less than or equal to the second specified amplitude threshold.

11. The computing apparatus according to claim 10, wherein when detecting that the third voltage reaches a specified voltage value, the second dynamic adjustment unit adjusts the conversion ratio parameter of the second optical-to-electrical conversion unit for the output optical analog signal by adjusting a bias voltage of the second optical-to-electrical conversion unit.

12. The computing apparatus according to any one of claims 1 to 8, wherein the digital-to-analog conversion module comprises a mantissa conversion unit and a gain adjustment unit, wherein

the mantissa conversion unit is configured to convert the mantissa part of the input floating-point number into the initial analog signal; and

the gain adjustment unit is configured to perform gain adjustment on the initial analog signal based on the exponent part of the input floating-point number, to obtain the input analog signal.

13. The computing apparatus according to claim 12, wherein the input analog signal is an input voltage analog signal, and the initial analog signal is an initial voltage analog signal; and the mantissa conversion unit comprises a reference unit and a gating unit, wherein

the reference unit is configured to provide an equal-difference voltage for the gating unit; and

the gating unit is configured to convert the mantissa part into the initial voltage analog signal based on the equal-difference voltage.

14. The computing apparatus according to claim 13, wherein the gain adjustment unit comprises a second operational amplifier and a plurality of feedback resistor branches, wherein

a first input end of the second operational amplifier is connected to an output end of the gating unit, and a second input end of the second operational amplifier is connected to a reference resistor; and

a first end of each of the plurality of feedback resistor branches is connected to the second input end of the second operational amplifier, and a second end of each of the plurality of feedback resistor branches is connected to an output end of the second operational amplifier; and a part or all of the plurality of feedback resistor branches are connected based on the exponent part of the input floating-point number, and gain adjustment is performed on the initial voltage analog signal output by the gating unit, to obtain the input voltage analog signal.

15. The computing apparatus according to any one of claims 12 to 14, wherein the analog computing module uses a resistive random access memory RRAM array.

16. The computing apparatus according to claim 12, wherein the input analog signal is an input current analog signal, and the initial analog signal is an initial current analog signal; and the mantissa conversion unit is of a current mirror structure, the current mirror structure comprises a reference transistor and a plurality of output transistor branches, and the plurality of output transistor branches are configured to: receive the mantissa part of the input floating-point number and output the initial current analog signal.

17. The computing apparatus according to claim 16, wherein the mantissa part of the input floating-point number comprises N bits; and
the current mirror structure comprises N output transistor branches, and each of the N output transistor branches is configured to receive one of the N bits.

18. The computing apparatus according to claim 16, wherein the mantissa part of the input floating-point number comprises N bits; and
the current mirror structure comprises M output transistor branches, and the M output transistor branches are configured to receive a thermometer code obtained by converting the N bits of the mantissa part, wherein the thermometer code comprises M bits.

19. The computing apparatus according to any one of claims 16 to 18, wherein the gain adjustment unit comprises a plurality of switch-controlled transistor branches, the plurality of switch-controlled transistor branches are configured to provide a plurality of gain adjustment coefficients, and the plurality of switch-controlled transistor branches are configured to: determine a target gain adjustment coefficient based on the exponent part of the input floating-point number, and perform gain adjustment on the initial current analog signal by using the target gain adjustment coefficient, to obtain the input current analog signal.

20. The computing apparatus according to any one of claims 16 to 19, wherein the analog computing module uses a flash memory transistor array.

21. The computing apparatus according to any one of claims 1, 2, and 9 to 11, wherein the input analog signal is an input optical analog signal, and the digital-to-analog conversion module comprises:

a mantissa conversion unit, configured to convert the mantissa part of the input floating-point number into the initial analog signal;
a gain adjustment unit, configured to perform gain adjustment on the initial analog signal based on the exponent part of the input floating-point number, to obtain an input electrical analog signal; and
an electrical-to-optical conversion unit, configured to convert the input electrical analog signal into the input optical analog signal.

22. The computing apparatus according to claim 21, wherein the analog computing module uses an optical computing link.

23. The computing apparatus according to any one of claims 1 to 22, wherein the computing apparatus further comprises an exponent pre-processing module and an exponent post-processing module, the exponent pre-processing module is connected to the digital-to-analog conversion module, and the exponent post-processing module is connected to the analog-to-digital conversion module;

the exponent pre-processing module is configured to: adjust exponent parts of a plurality of to-be-processed floating-point numbers to obtain a plurality of input floating-point numbers, and input the plurality of input floating-point numbers into the digital-to-analog conversion module; and
the exponent post-processing module is configured to: receive the result floating-point number output by the analog-to-digital conversion module, and adjust the exponent part of the result floating-point number to obtain a target result floating-point number.

24. The computing apparatus according to claim 23, wherein the exponent pre-processing module is configured to: when each of the exponent parts of the plurality of to-be-processed floating-point numbers is less than or equal to a specified threshold, increase the exponent parts of the plurality of to-be-processed floating-point numbers by a same reference value to obtain the plurality of input floating-point numbers, wherein the reference value is determined based on a largest value in the exponent parts of the plurality of to-be-processed floating-point numbers; and
the exponent post-processing module is configured to reduce the exponent part of the result floating-point number by the reference value.

25. The computing apparatus according to claim 23, wherein the input floating-point numbers comprise a first group of input floating-point numbers and a second group of input floating-point numbers; and the analog computing module is configured to perform vector multiplication on the first group of input floating-point numbers and the second group of input floating-point numbers;

the exponent pre-processing module is configured to: adjust exponent parts of a plurality of first to-be-processed floating-point numbers based on a first value to obtain the first group of input floating-point numbers, and adjust exponent parts of a plurality of second to-be-processed floating-point numbers based on a second value to obtain the second group of input floating-point numbers; and
the exponent post-processing module is configured to adjust the exponent part of the result floating-point number based on the first value and the second value.

26. A computing chip, comprising the computing apparatus according to any one of claims 1 to 25.

10

| Computing chip | | | | |

Input data → Module A → Module B → Computing apparatus 100 → Module D → Output data

FIG. 1

100

Computing apparatus

| Digital-to-analog conversion module 110 | Analog computing module 120 | Analog-to-digital conversion module 130 |

FIG. 2

100

Computing apparatus

200

Analog computing module 120

Input analog signal ← Digital-to-analog conversion module 110 ← Floating-point number

Computing result analog signal → Analog-to-digital conversion module 130 → Floating-point number → Digital processing module

FIG. 3

110

Digital-to-analog conversion module

Exponent part of an input floating-point number

120

Input analog signal

Mantissa part of the input floating-point number

| Gain adjustment unit 112 | Mantissa conversion unit 111 |

Analog computing module

130

Analog-to-digital conversion module

Exponent part of a result floating-point number

Computing result analog signal

Mantissa part of the result floating-point number

| Signal conversion unit 131 | Mantissa output unit 132 |

FIG. 4

FIG. 5

EP 4 782 987 A1

FIG. 6

FIG. 7

121

BL1

WL1

$V_1$

BL2

WL2

$V_2$

⋯

BLn

WLn

$V_n$

SL

FIG. 8

FIG. 9

Computing result analog signal $I_1$

Computing result analog signal $I_2$

FIG. 10

FIG. 11

FIG. 12

FIG. 13

EP 4 782 987 A1

EP 4 782 987 A1

FIG. 14

FIG. 15

130

Analog-to-digital conversion module

Exponent part of a result
floating-point number

Output current
analog signal

Dynamic adjustment
unit 1352

Operational amplifier
unit 1351

Quantization unit 1353

Mantissa output unit
136

Mantissa part of the result
floating-point number

Signal conversion unit 135

FIG. 16

FIG. 17

FIG. 18

EP 4 782 987 A1

```
                                                        ┌─ 110
┌──────────┐                    ┌─────────────────────────────────────────────┐   Exponent part of an input
│          │      ┌─ 123        │         Digital-to-analog conversion module │   floating-point number
│          │                    │                                             │
│ Optical  │   Input optical    │  ┌──────────────┐ ┌──────────┐ ┌──────────┐ │   Mantissa part of the input
│computing │   analog signal    │  │Electrical-to-│ │   Gain   │ │ Mantissa │ │   floating-point number
│  link    │◄───────────────────┼──│   optical    │◄│adjustment│◄│conversion│◄┼──
│          │                    │  │conversion    │ │ unit 118 │ │ unit 117 │ │
│          │                    │  │unit 119      │ └──────────┘ └──────────┘ │
│          │                    └─────────────────────────────────────────────┘
│          │                                        ┌─ 130
│          │                    ┌─────────────────────────────────────────────┐   Exponent part of a result
│          │                    │        Analog-to-digital conversion module  │   floating-point number
│          │  Output optical    │                                             │
│          │  analog signal     │  ┌──────────────┐ ┌──────────┐ ┌──────────┐ │   Mantissa part of the result
│          │────────────────────┼─►│First optical-│ │Electrical│ │ Mantissa │ │   floating-point number
│          │                    │  │to-electrical │►│-to-digital│►│ output  │─┼──►
└──────────┘                    │  │conversion    │ │conversion│ │ unit 138 │ │
                                │  │unit 1371     │ │unit 1372 │ └──────────┘ │
                                │  └──────────────┘ └──────────┘              │
                                │        Signal conversion unit 137           │
                                └─────────────────────────────────────────────┘
```

FIG. 19

FIG. 20

123

110

Digital-to-analog conversion module

Exponent part of an input
floating-point number

Input optical
analog signal

Mantissa part of the input
floating-point number

| Electrical-to-optical conversion unit 119 | Gain adjustment unit 118 | Mantissa conversion unit 117 |

130

Analog-to-digital conversion module

Exponent part of a result
floating-point number

Optical
computing
link

Output optical
analog signal

Dynamic adjustment
unit 1393

Second
optical-to-electrical
conversion unit 1391

Current-to-voltage
conversion unit
1392

Signal conversion unit 139

Quantization unit
1394

Mantissa output
unit 138

Mantissa part of the result
floating-point number

FIG. 21

FIG. 22

FIG. 23

FIG. 24

S251

Receive a plurality of to-be-processed
floating-point numbers, and obtain
exponent parts of the plurality of
to-be-processed floating-point numbers

S252

Determine
whether the exponent parts of
the plurality of to-be-processed floating-point
numbers are all less than or equal
to a specified
threshold

No

S253

Use the plurality of to-be-processed
floating-point numbers as a plurality
of input floating-point numbers, and
transmit the plurality of input
floating-point numbers to a
digital-to-analog conversion module

Yes

S254

Increase the exponent parts of the plurality of
to-be-processed floating-point numbers by a
same reference value to obtain a plurality of
input floating-point numbers, and transmit the
plurality of input floating-point numbers to a
digital-to-analog conversion module

FIG. 25

S261

Convert a mantissa part of an input floating-point
number into an initial analog signal

S262

Perform gain adjustment on the initial analog signal
based on an exponent part of the input floating-point
number, to obtain an input analog signal

S263

Perform analog computing based on the input analog
signal to obtain a computing result analog signal

S264

Convert the computing result analog signal into a
result floating-point number

FIG. 26

## INTERNATIONAL SEARCH REPORT

| International application No. |
| --- |
| **PCT/CN2024/126111** |

| A. | CLASSIFICATION OF SUBJECT MATTER |
| --- | --- |

G06F 7/544(2006.01)i

According to International Patent Classification (IPC) or to both national classification and IPC

| B. | FIELDS SEARCHED |
| --- | --- |

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNKI, DWPI, CNTXT, ENTXT, IEEE, VEN: 模数, 数模, 模拟, 尾数, 指数, 增益调节, 浮点数, 电压, 积分, DAC, ADC, analog, digital, mantissa, exponent, index, floating, voltage, integral

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 116384246 A (TSINGHUA UNIVERSITY) 04 July 2023 (2023-07-04) description, paragraphs 48 and 110 | 1, 12, 15, 21-23, 26 |
| Y | JP S5630322 A (TOKYO SHIBAURA ELECTRIC CO., LTD.) 26 March 1981 (1981-03-26) description, columns 1-7, figures 1-2, and abstract | 1, 12, 15, 21-23, 26 |
| A | CN 110442323 A (FUDAN UNIVERSITY) 12 November 2019 (2019-11-12) entire document | 1-26 |
| A | WO 2023164802 A1 (NANKAI UNIVERSITY et al.) 07 September 2023 (2023-09-07) entire document | 1-26 |
| A | CN 110739970 A (SHANGHAI AWINIC TECHNOLOGY CO., LTD.) 31 January 2020 (2020-01-31) entire document | 1-26 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **13 December 2024** | **23 December 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT | International application No. |
| Information on patent family members | PCT/CN2024/126111 |

| Patent document cited in search report | Publication date (day/month/year) | Patent family member(s) | Publication date (day/month/year) |
|---|---|---|---|
| CN 116384246 A | 04 July 2023 | None | |
| JP S5630322 A | 26 March 1981 | None | |
| CN 110442323 A | 12 November 2019 | None | |
| WO 2023164802 A1 | 07 September 2023 | None | |
| CN 110739970 A | 31 January 2020 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311429893